# EUROPEAN PATENT APPLICATION

(11) **EP 2 369 892 A1**
(43) Date of publication of application: **28.09.2011**
(21) Application number: 10157831.8
(22) Date of filing: 25.03.2010
(51) Int. Cl.: H04W 76/02

(54) **Improved Utilization of Radio Interface Resources for Wireless Relays**

(71) Applicant: Panasonic Corporation, Kadoma-shi Osaka 571-8501 (JP)
(72) Inventor: Velev, Genadi, 63225, Langen (DE); Bachmann, Jens, 63225, Langen (DE); Tamura, Takashi, Osaka 571-8501 (JP); Ikeda, Shinkichi, Chuo-ku Osaka 540-6207 (JP)
(74) Representative: Grünecker, Kinkeldey, Stockmair & Schwanhäusser Anwaltssozietät

(57) **Abstract**

The present invention relates to transmission of signalling messages between a mobile node and a mobility management entity serving the mobile node over a relay node, without establishing relay node data bearer to the network. In particular, the relay node receives a signalling message from the mobile terminal and without transiting to the connected mode encapsulates the received message in a control plane protocol and transmits it in control plane over the mobility management entity serving the relay node to the mobility management entity serving the mobile node. Transmission between the mobility management entity serving the relay node and the mobility management entity serving the mobile node may be facilitated by means of a tunnel over a gateway serving the relay node.

## Description

The invention relates to transport of signalling messages in a mobile communication network. In particular, the present invention relates to transport of signalling on the interface between a relay node and another node in the mobile communication network.

### BACKGROUND OF THE INVENTION

Third-Generation (3G) mobile systems, such as, for instance, Universal Mobile Telecommunications System (UMTS) standardized within the Third-Generation Partnership Project (3GPP), have been based on Wideband Code Division Multiple Access (WCDMA) radio access technology. Today, 3G systems are being deployed on a broad scale all around the world. After enhancing this technology by introducing High-Speed Downlink Packet Access (HSDPA) and an enhanced uplink (HSUPA), the next major step in evolution of the UMTS standard has brought a combination of Orthogonal Frequency Division Multiplexing (OFDM) for the downlink and Single Carrier Frequency Division Multiplexing Access (SC-FDMA) for the uplink. This system has been named Long-Term Evolution (LTE) since it has been intended to cope with future technology evolutions. The corresponding mobile network architecture defined by the 3GPP is known as Evolved 3GPP Packet Switched Domain and also as the Evolved Packet System (EPS). The EPS combines an Evolved Packet Core (EPC) network that is able to connect a new generation of an access network technology called Evolved Universal Terrestrial Radio Access Network (E-UTRAN), as well as the pre-successor of the E-UTRAN called Universal Terrestrial Radio Access Network (UTRAN). A description of the EPS can be found in 3GPP Technical Specification 23.401; "General Packet Radio Service (GPRS) enhancements for Evolved Universal Terrestrial Radio Access Network (E-UTRAN) access"; v. 8.6.0, June 2009, available freely at www. 3gpp. org. The 3GPP EPS is also able to provide connectivity to mobile terminals attached non-3GPP access networks. Document 3GPP Technical Specification 23.402; "Architecture enhancements for non-3GPP accesses"; v. 8.6.0, June 2009, also available freely at www. 3gpp. org*,* describes the inter-connection between the EPC and the non-3GPP access networks. The 3GPP access networks are based on access technologies standardized by the 3GPP organization. The non-3GPP access networks are based on access technologies defined by other organizations, such as the Institute of Electrical and Electronics Engineers (IEEE) and the 3rd Generation Partnership Project 2 (3GPP2). For instance, WLAN and WiMAX are two technologies defined by the IEEE, which may interwork with the EPC.

The aim of the LTE is to achieve a significantly higher data rates compared to HSDPA and HSUPA, in order to improve the coverage for the high data rates, to significantly reduce latency in the user plane in order to improve the performance of higher layer protocols (for example, TCP), as well as to reduce delay associated with control plane procedures, such as, for instance, session setup. Focus has been given to the convergence towards use of Internet Protocol (IP) as a basis for all future services, and, consequently, on the enhancements to the packet-switched (PS) domain. LTE's radio access should be extremely flexible, using a number of defined channel bandwidths between 1.25 and 20 MHz (contrasted with original UMTS fixed 5 MHz channels). In particular, in the downlink, Orthogonal Frequency Division Multiplexing (OFDM) based radio, access was adopted because of its inherent immunity to multi-path interference (MPI) due to a low symbol rate, and due to the use of a cyclic prefix (CP), and its affinity to different transmission bandwidth arrangements. Single-carrier frequency division multiple access (SC-FDMA) based radio access was adopted in the uplink, since provisioning of wide area coverage was prioritized over improvement in the peak data rate considering the restricted transmission power of the user equipment (UE). Many key packet radio access techniques are employed, including multiple-input multiple-output (MIMO) channel transmission techniques, and a highly efficient control signalling structure is achieved in LTE (Release 8). In order to accommodate as many frequency band allocation arrangements as possible, LTE standard supports two different radio frame structures, which are applicable to Frequency Division Duplex (FDD) and Time Division Duplex (TDD) modi of the standard. LTE can co-exist with earlier 3GPP radio technologies, even in adjacent channels, and calls can be handed over to and from all 3GPP's previous radio access technologies.

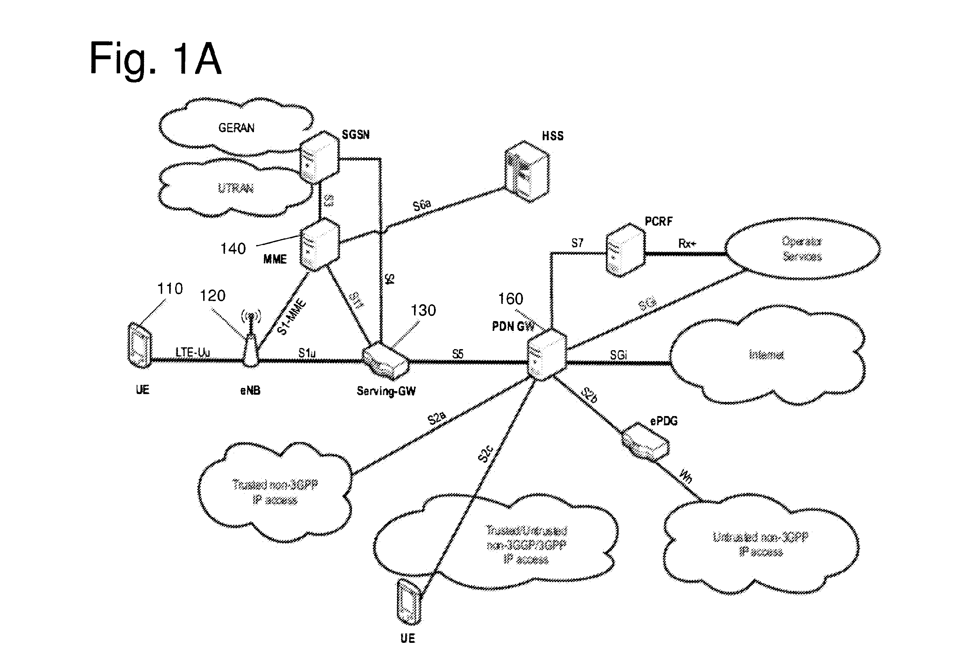

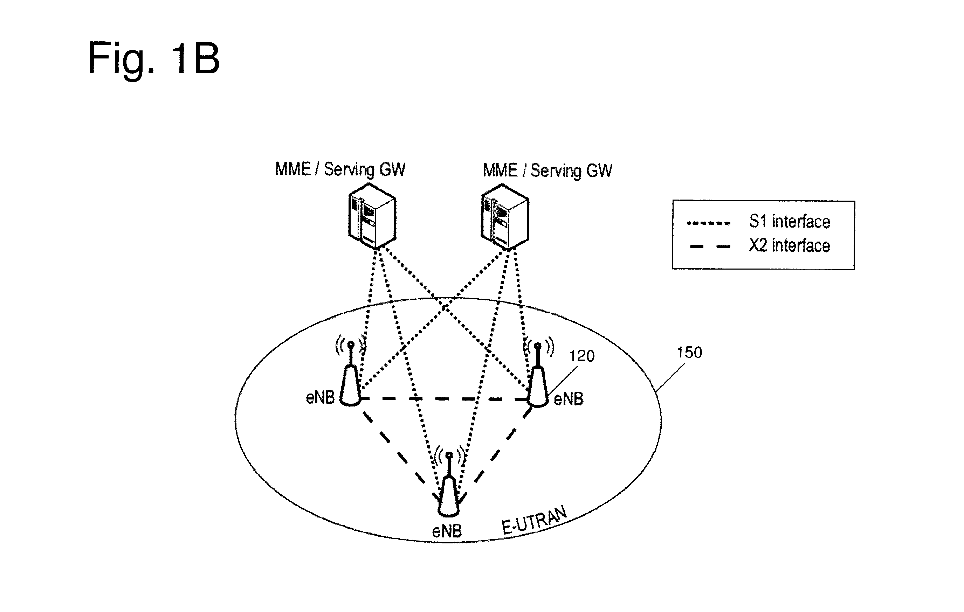

The overall architecture of the LTE system is shown in Figure 1A. A more detailed representation of the architecture of Enhanced UMTS Terrestrial Radio Access Network (E-UTRAN) 150 is provided in Figure 1B. The LTE network is a two-node architecture consisting of access gateways 130, 160 and enhanced network nodes 120, so-called eNode Bs (eNB). The access gateways 130, 160 handle core network functions, i.e. routing calls and data connections to external networks, and also implement radio access network functions. Thus, an access gateway may be considered as combining the functions performed by Gateway GPRS Support Node (GGSN) and Serving GPRS Support Node (SGSN) in today's 3G networks and radio access network functions, such as, for example, header compression or ciphering/integrity protection.

In particular, there are two types of data packet gateways located in the EPC and supporting the UE mobility: Serving Gateway (SGW) 130 and Packet Data Network Gateway (PDN-GW or abbreviated PGW) 160. The SGW 130 terminates the interface towards the radio access networks, e.g. the UTRAN or the E-UTRAN. The mobility within one radio access network (UTRAN or E-UTRAN) is access specific. The mobility within the EPC is managed by the PGW 160. As described in the above cited 3GPP specifications, the mobility management in the EPC between the PGW and the SGWs can be based either on the Proxy MIPv6 (PMIP) protocol or on the GPRS Tunneling Protocol (GTP). The PGW 160 performs the function of Local Mobility Anchor (LMA) in the case of PMIPv6, and the function of GTP tunnel endpoint in the case of GTP. The interface between the SGW 130 and the PGW 160 is called S5. The S5 interface can be based on either the GTP or the PMIPv6 protocol. The PGW 160 further performs IP address allocation to the UE 210 and packet filtering (for instance, deep packet inspection, packet screening) in order to map the UE's traffic to an appropriate QoS level.

The eNodeBs 120 provide the E-UTRA user plane (PDCP/RLC/MAC/PHY) and control plane (RRC) protocol terminations towards the user equipment (UE) 110. The eNodeB (eNB) hosts the Physical (PHY), Medium Access Control (MAC), Radio Link Control (RLC), and Packet Data Control Protocol (PDCP) layers. It also offers Radio Resource Control (RRC) functionality corresponding to the control plane. It performs many functions including radio resource management, admission control, scheduling, enforcement of negotiated uplink Quality of Service (QoS), cell information broadcast, ciphering/deciphering of user and control plane data, and compression and decompression of downlink and uplink user plane packet headers. The eNodeBs 130 are interconnected with each other by means of the X2 interface. The air (radio) interface is an interface between a User Equipment (UE) 110 and an eNodeB 120. Here, the user equipment 110 may be, for instance, a mobile terminal, a PDA, a portable PC, a PC, or any other apparatus with a receiver/transmitter capable of receiving/transmitting according to the LTE standard.

The eNodeBs 120 are also connected by means of the S1 interface to the EPC (Evolved Packet Core), more specifically to the MME (Mobility Management Entity) 140 by means of the S1-MME interface and to the Serving Gateway (SGW) 130 by means of the S1-U interface. The S1 interface supports a many-to-many relation between MMEs/Serving Gateways and eNodeBs. The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and Packet Data Network (PDN) GW 160). For idle state user equipments, the SGW terminates the downlink data path and triggers paging when downlink data arrives for the user equipment. It manages and stores user equipment contexts, e.g. parameters of the IP bearer service, network internal routing information. It also performs replication of the user traffic in case of lawful interception.

The MME 140 is the key control-node for the LTE access-network 150. It is responsible for idle mode user equipment tracking and paging procedure including retransmissions. It is involved in the bearer activation/deactivation process and is also responsible for choosing the SGW 130 for user equipment 110 at the initial attach and at time of intra-LTE handover involving Core Network (CN) node relocation. It is responsible for authenticating the user (by interacting with the HSS). The Non-Access Stratum (NAS) signalling terminates at the MME 140, and the MME 140 is also responsible for generation and allocation of temporary identities to user equipments 110. It checks the authorization of the user equipment 110 to camp on the service provider's Public Land Mobile Network (PLMN) and enforces user equipment roaming restrictions. The MME 140 is the termination point in the network for ciphering/integrity protection for NAS signalling and handles the security key management. Lawful interception of signalling is also supported by the MME. The MME provides the control plane function for mobility between LTE and 2G/3G access networks with the S3 interface terminating at the MME from the SGSN. The MME also terminates the S6a interface towards the home HSS for roaming user equipment.

Regarding the mobility management, 3GPP defines two mobility management states: a REGISTERED and a DEREGISTERED state. When a UE 110 is in the DEREGISTERED state, the MME 140 has no valid location or routing information for the UE 110, and thus the UE 110 cannot be reached. In the DEREGISTERED state, the UE 110 is most likely either switched off, or in the non-3GPP access, or out of coverage area. However, in the DEREGISTERED state, some security context can still be stored in the UE 110 and in the MME 140, for instance, in order to avoid running an authentication and key agreement (AKA) procedure during each attach procedure.

In the REGISTERED state, a UE 110 is attached either to the E-UTRAN 150 or to the GERAN/UTRAN access network. The attached UE 110 can receive EPS services. The MME 140 knows the UE location at least in accuracy of the tracking area. In particular, in the REGISTERED state, the UE 110 shall
- always have at least one active PDN connection, and
- set up an EPS security context.

Packet Data Network (PDN) connection is an association between a mobile node represented by one IPv4 address and/or one IPv6 prefix and a packet data network (PDN) represented by a particular Access Point Name (APN). Usually this is the association between the mobile node and the PGW that is assigned to that APN.

In the REGISTERED mobility state, the UE 110 can be in two different connection management states: an idle state and a connected state. The UE 110 is in the idle state when no data is being transmitted and the radio resources are released, but the UE still has a valid IP configuration. In the idle state, there is no Non-Access Stratum (NAS) signalling connection between the UE 110 and the network, for instance, the MME 140. In the idle state, the network (e.g. MME 140) assigns an area of one or multiple eNB cells where the UE 110 may move without performing any signaling to the network, i.e. the network just knows that the UE 110 is within this area but does not know the exact location. In 3GPP LTE such an area is identified by eNB cell IDs of the plurality of eNB cells forming the area. Using the 3GPP terminology this area could be called a Tracking Area (TA) and it is identified by a list of the IDs of the eNB cells. The network (MME 140) informs the UE 110 about the Tracking Area (i.e. about the list of eNB cell IDs) assigned to the UE 110. Please note that in the 3GPP terminology the list of eNB cell IDs is called Tracking Area Identifier (TAI) list. When the UE 110 is in idle mode and the UE 110 moves within the eNB cells being a part of the TA, the UE 110 chooses to camp on a particular eNB cell. Camping means that the UE 110 listens and reads the eNB broadcast signals, but the UE does not send anything to the eNB. The UE is seamless for the eNB, i.e. the eNB does not know that which UEs in idle state are camping on it. When the UE 110 moves and detects a new TA, i.e. an eNB cell that is not in the list of assigned eNB cell IDs, the UE 110 performs the Tracking Area Update (TAU) procedure, which updates the UE location in the MME 140. Also, during the idle state there is no S1 connection between the eNB 120 and the SGW 130. The MME 140 can generate a separate TA for each UE 110.

When a Non-Access Stratum (NAS) signalling connection needs to be established between the UE 110 and the MME 140, for instance, due to the TAU procedure when moving to a new tracking area, the UE 110 and the MME 140 shall enter the connected state. In LTE, the NAS protocol/signalling occurs between the UE 110 and the MME 140 and supports the mobility management functionality, as well as the user plane bearer activation, modification and deactivation. In the following the term "NAS message" is used as a shorter form of the term "NAS signaling message".

Initial NAS messages that initiate a transition from the idle to the connected state are "Attach Request", "Tracking Area Update Request", "Service Request" or "Detach Request". When the UE is in the idle state, the UE 110 and the network may be unsynchronized, which means that the UE 110 and the network may have different sets of established EPS bearers. When the UE 110 and the MME 140 enter the connected state, the set of EPS bearers is synchronized between the UE and network.

Thus, in the connected state, the UE 110 and the MME 140 have an active NAS signalling connection. This is usually the case when the UE 110 has an active data flow and the corresponding S1 connection, and when the radio resources are allocated for that data flow. In other words, the UE has an active radio- and S1-bearers. In the connected state, the UE location is known in the MME 140 with the accuracy provided by a serving eNB 120 and the mobility of UE 110 is handled by the handover procedure controlled by the network. When the network detects that the UE 110 is not sending/receiving data, the network (usually the eNB 120) may decide to release the radio resources, meaning that the S1 bearer is also released and the UE 110 should transit to the idle state.

In general, the mobility states and the connection states are independent of each other. For instance, transition from the REGISTERED to the DEREGISTERED mobility state for a UE 110 can occur regardless of its connection state. However, the UE 110 can be in a connection state, i.e. idle or connected, only when it is in the REGISTERED mobility state. A combined state/mode could be described as a REGISTERED-idle or a REGISTERED-connected state.

There are recent activities in the 3GPP for introducing a wireless relay node (RN) entity to extend the coverage of an eNB cell. The RN forms an independent physical cell. From a UE perspective, the RN is seen as a usual eNB 120. The RN is connected via a wireless link to the eNB 120. The RN can be stationary or mobile. The RN architecture deployment foresees that a RN emulates an eNB for the UE, which means that the UE 110 would see the RN as a usual eNB 120. From the network side, the RN is seen as a usual UE by the eNB 120. The eNB 120, to which the RN is connected, is called Donor-eNB (DeNB) and operates as a usual eNB. The different alternatives for deployment of RN in the 3GPP network architecture are described, for instance, in 3GPP Technical Specification 36.806; "Relay architectures for E-UTRA (LTE-Advanced)"; v. 0.2.0, November 2009, available freely at www.3gpp. org. Accordingly, there are two main architecture variants:
- Architecture A, in which both U-plane and C-plane of the UE's S1 interface are terminated at the RN. Architecture A has three alternatives called Alternative (Alt.) 1, 2 and 3, and
- Architecture B, in which both U-plane and C-plane of the UE's S1 interface are terminated at the DeNB.

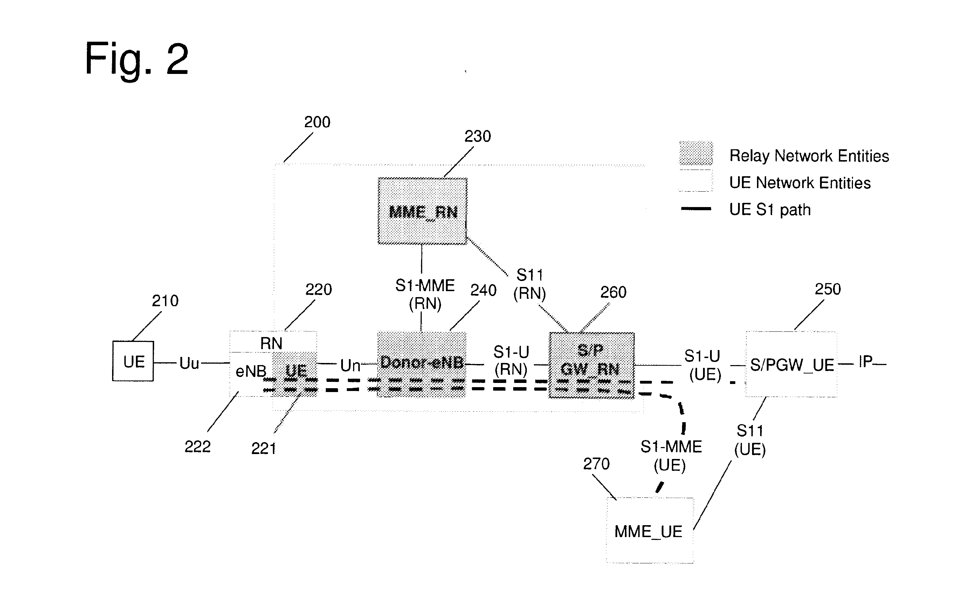

Figure 2 shows a simplified deployment of architecture A in the 3GPP EPS network. In Figure 2, boxes of a gray color represent the additional entities needed to deploy the RN functionality. Moreover, boxes of a white color represent the usual EPS entities involved in the 3GPP network architecture according to an EPS specification, for instance, 3GPP Technical Specification 23.401; "General Packet Radio Service (GPRS) enhancements for Evolved Universal Terrestrial Radio Access Network (E-UTRAN) access"; v. 8.6.0, June 2009, available freely at www.3gpp.org. A UE 210 is connected to a RN 220 via the usual Uu interface. Thus, there are no changes compared to the above cited EPS specification. The RN entity 220, being a part of a relay network 200, can be represented as a composition of an eNB part 222 and a UE part 221. The UE part 221 of the RN 220 is connected to the DeNB 240 via the Un interface, being currently under specification. The connectivity and mobility of the RN 220 is managed as the connectivity and mobility of a usual UE. For this purpose there are additional MME 230 and SGW/PGW (simplified expression for the SGW and PGW, also called S/PGW) 260 present in order to serve the RN 220. The notation MME_RN 230 and S/PGW_RN 260 indicates that these entities serve the RN 220, more precisely the UE part 221 of the RN 220. Correspondingly the user (U-) and control (C-) plane interfaces for the RN 220 are called S1-U (RN) and S1-MME (RN). The UE user and control plane interfaces are shown with interrupted (dashed) lines between the eNB part 222 of the RN and the MME_UE 270 and S/PGW_UE 250, which serve the UE 210. All UE packets for control signalling (to the MME_UE 270) and data packets (to the S/PGW_UE 250) traverse the data bearers of the RN 220, which means that they are forwarded over the S1-U (RN) interface of the RN 220. In other words, all UE packets are forwarded over the S/PGW_RN 260 before reaching the UE EPC entities MME_UE 270 and S/PGW_UE 250.

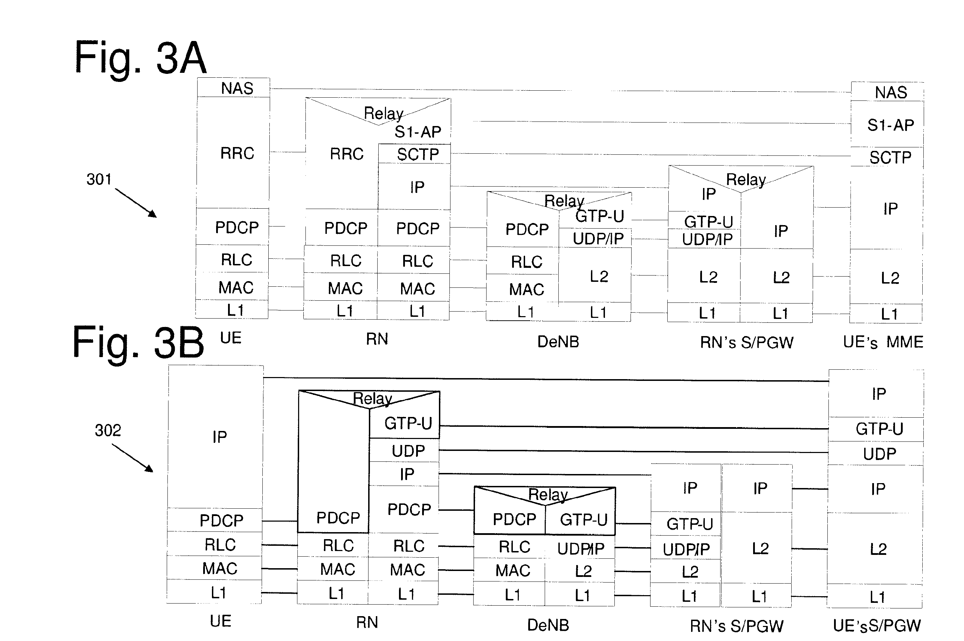

Figures 3A and 3B illustrate the protocol stacks 301 and 302 between the UE 210 and MME_UE 270 in the control plane and between the UE 210 and UE's S/PGW 250 in the user plane 302, respectively. The S1-U interface (with a GTP for the user plane, GTP-U) and the S1-MME interface (with a S1-Application Protocol, S1-AP) for the UE 210 are terminated at the RN 220. In general, the S1-AP protocol provides a signalling service between an eNB 120 and an MME 140. The S1-AP messages are carried over the Stream Control Transmission Protocol (SCTP) that acts as a transport protocol.

In the control plane 301, there is a direct NAS connection between the UE 210 and the MME_UE 270. The S1-MME (UE) interface packets, i.e. packets transmitted between the eNB part 222 of the RN 220 and the MME_UE 270, are encapsulated over the S1-U (RN) interface between the DeNB 240 and the S/PGW_RN 260. Thus, from the UE perspective, the RN 220 is acting as a usual eNB 120. The S1-AP packets from the eNB part 222 of the RN 220 are carried over the Un and S1-U (RN) interfaces over the data bearers as usual data packets between the RN's UE part 221 and the S/PGW_RN 260.

In the user plane 302, there is a direct IP connection between the UE 210 and the S/PGW_UE 250. The GTP-U packets of the S1-U connection between the eNB part 222 of the RN 220 and the S/PGW_UE 250 are tunneled over another GTP-U tunnel for the S1-U connection between the DeNB 240 and the S/PGW_RN 260. The user plane shows that the UE part 222 of the RN 220 also has a direct IP connection to the S/PGW_RN 260. In other words, the UE's data packets are forwarded over one GTP-U tunnel between the RN 220 and the S/PGW_UE 250, and, additionally are encapsulated over another GTP-U tunnel between the DeNB 240 and the S/PGW_RN 260.

When all UEs attached to a RN are in idle state, it is beneficial for the RN (more precisely for the UE part 221 of the RN 220, which is also referred to as RN_UE 221) to also transit to idle state. The UE part 221 of the RN 220 and the eNB part 222 of the RN 220 may have separate transmitters and separate receivers and may operate, for instance, transmit and receive data, independently of each other. By keeping the RN 220 in the idle state, especially when the RN is battery driven, the consumption of energy required for maintaining the Un interface in connected state can be avoided. In particular, considering that the RN 220 consists of an eNB part 222 and a UE part 221, the UE part 221 of the RN 220 maintaining the Un interface transits to idle state. The eNB part 222 of the RN 220 should continue to send broadcast messages over the Uu interface as a usual eNB, independently of the fact whether all UEs in the eNB's cell are in idle state or not. The assumption that the UE part 221 of the RN 220 goes to idle state is realistic especially when considering that the RN 220 implements two different radio transmitters for the Un and Uu interfaces, respectively. Thus, there is a separate radio transmitter for the RN's UE part 221 and for the RN's eNB part 222. The assumption of the idle state over the Un interface would be particularly beneficial when the RN is battery powered and/or mobile.

Summarizing, the RN 220 is in the idle state when no data is being transmitted on the Un interface for a certain time and the radio resources on the Un interface are released. In the idle state, there is no Non-Access Stratum (NAS) signalling connection between the UE part 221 of the RN 220 and the network, for instance, the MME_RN 230. During the idle state there is also no S1 connection between the DeNB 240 and the S/PGW_RN 260. On the other hand, in the connected state, the RN 220 and the MME_RN 230 have at least an active NAS signaling connection. This is usually the case when the RN 220 has an active data flow and the corresponding S1 connection, and when the radio resources are allocated for that data flow at least on Un interface. In other words, the RN has active radio- and S1-bearers. When the network (in particular the DeNB 240) detects that the RN 220 is not sending/receiving data, the network may decide to release the radio resources, upon which the S1 bearer is also released and the RN 220 should transit to the idle state.

Each time a UE 210 connected to an RN 220 performs an Attach, Detach, Tracking Area Update (TAU) or Service Request procedure, the RN 220 in idle state over the Un interface (RN_UE in idle state) has to transit to the connected state. Then, the RN 220 triggers the establishment of Data Radio Bearers (DRB) over the Un interface, and the corresponding S1-U bearers, in order to convey the corresponding UE's NAS messages.

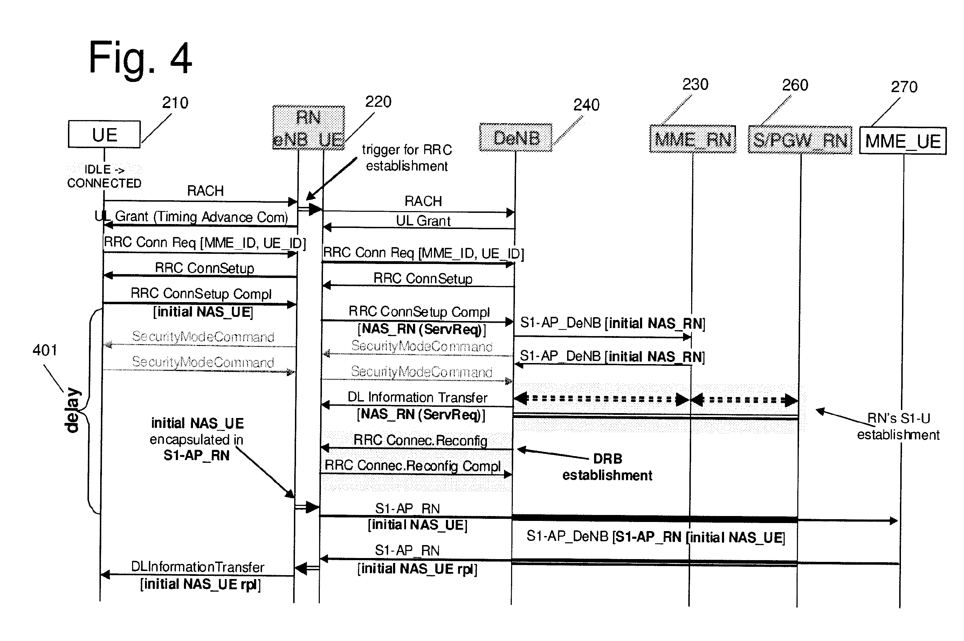

Figure 4 shows a detailed signalling flow in such a scenario for the transition from idle to connected states when both the UE 210 and the RN 220 were in idle state. In this example, the UE performs a TAU procedure.

When a NAS layer in the UE has to send an initial NAS message (denoted "initial NAS_UE" in Figure 4, wherein the "_UE" suffix indicates that the message is originated by the UE), the UE first initiates the establishment of the Radio Resource Control (RRC) connection over the Uu interface by sending Random Access Channel (RACH) message to the RN (denoted as "RACH"). Random Access Channel is a channel used for unscheduled initial access of a mobile node to the access network according to a random access procedure. The random access procedure, the exchange of RRC Connection Request, Setup and Complete messages for setting-up signalling radio bearers (SRB) as well as other RRC procedures can be found in 3GPP TS 36.331 "Evolved Universal Terrestrial Radio Access (E-UTRA); Radio Resource Control (RRC); Protocol specification", Release 8 or 9, available freely at www. 3gpp. org. In parallel to the establishment of the RRC connection over the Uu interface, the RN, in particular, the UE part 221 of the RN 220, initiates the establishment of the RRC connection over the Un interface. The RRC connection establishment procedure over the Uu and Un interfaces is identical. The UE transmits on the Uu interface the "initial NAS_UE" message included in the RRC Connection Setup Complete (denoted as "RRC ConnSetup Compl") message to the RN (eNB part 222).

The following exchange of security mode commands on Uu and Un interface is employed to exchange security credentials to encrypt the following signalling exchange between the RN 220 and DeNB 240.

After the establishment of the RRC connection over the Un interface is completed, the RN 220 sends a NAS Service Request (denoted as "NAS_RN(ServReq)", wherein the "_RN" suffix indicates that the message is originated by the RN 220, UE part 221) message to the RN's MME 230. The NAS Service Request message triggers the establishment of data radio bearer (DRB) over the Un interface and establishment of an S1-U bearer between the DeNB 240 and the RN's S/PGW 260. The DRB establishment between the RN 220 and DeNB 240 as well as the S1-U bearer establishment between the DeNB 240 and the S/PGW_RN 260 are shown in gray boxes in Figure 4 (and denoted as "DRB establishment" and "RN's S1-U establishment, respectively).

The DeNB 240 sends the RN's NAS Service Request over the S1-AP protocol to the RN's MME ("initial NAS_RN") 230. After the NAS Service Request reply arrives at the DeNB 240, the DeNB 240 transmits it to the RN included in the DL Information Transfer RRC message. Then the DeNB 240 starts the establishment of DRB to the RN 220 by exchanging RRC Connection Reconfiguration ("RRC Connec. Reconfig") and RRC Connection Reconfiguration Complete ("RRC Connec. Reconfig. Compl.") messages. This concludes the establishment of the DRB over the Un interface. The RN 220 can then generate an S1-AP message (comprising the UE's "initial NAS_UE" message) and send it to the MME_UE 270. The RN's S1-AP message is sent over the data bearer through the S/PGW_RN 260 to the MME_UE 270. The UE's TAU procedure is completed by the positive reply from the MME_UE 270 ("initial NAS_UE rpl") sent over the data bearer through the S/PGW_RN 260 back to the RN 220 and further sent to the UE 210 within the DL Information Transfer RRC message.

The delay 401 caused in the RN 220 for the transmission of the UE's initial NAS message is caused due to the establishment of the RN's data bearers between the RN 220 and the S/PGW_RN 260. Another disadvantage of the signalling scheme of Figure 4 is the high number of messages exchanged over the Un interface and the core network. All these messages serve only to enable a single NAS exchange between the UE 210 and the MME_UE 270. In this particular example, in order to exchange two NAS messages between the UE 210 and the MME_UE 270 (TAU request and TAU accept messages), establishment of SRBs (SRB0, SRB1) and DRB over the Un interface and the S1-U bearer over the S1-U interface between the DeNB 240 and S/PGW_RN 260 are needed. This may reduce the efficiency of the signalling essentially.

### SUMMARY OF THE INVENTION

The aim of the present invention is to improve the efficiency of signaling in a wireless communication network with a relay node especially on the interface between the relay node and another access network entity. It would also be advantageous to reduce the amount of signaling on other interfaces within the network.

This is achieved by the subject matter of the independent claims.

Advantageous embodiments of the invention are subject to the dependent claims.

It is the particular approach of the present invention to keep the relay node in the idle state as long as possible and to avoid establishment of data bearers if only a signaling message is to be transported over the relay node. Accordingly, the relay node, being possibly in the idle state, receives a signaling message from a mobile node, encapsulates it into a control plane protocol and transmits it in the control plane to another corresponding entity of the network without establishing data bearers.

Transmitting a signaling message received from the mobile node in control plane enables avoiding the establishment of data bearers. This has an advantage of saving energy at the relay node, which is particularly beneficial in case that the relay node is battery-powered. Another advantage is the reduced amount of signaling message exchanges on the network interfaces.

In accordance with a first aspect of the present invention, a method is provided for transmitting a message between a mobile node and a mobility management entity serving the mobile node, over a relay node, in a mobile communication system. The method comprises following steps performed by the relay node: receiving a message from the mobile node, encapsulating the received message into a relay node control plane protocol, and transmitting in control plane the encapsulated message for the mobility management entity serving the mobile node.

Preferably, the method further comprises determining whether the message received from the mobile node is a signalling message for handling a data bearer establishment or not. In particular, it is an establishment of a data bearer on the interface between the mobile node and the relay node. A signaling message for handling a data bearer establishment may be, for instance, a signaling message for initiating the data bearer establishment such as requesting the data bearer establishment or for granting/rejecting the data bearer establishment, or a data bearer establishment acknowledging (positive or negative) message. For instance, the signaling message may be a service request message for requesting an establishment of data bearer or a tracking area update message which also may request establishing of data bearers, for example, by means of setting a flag within the message. These signaling messages may be received by the relay node in the uplink direction, i.e. generated by the mobile node, or in the downlink direction generated by a network entity such as a mobility management entity serving either the relay node, or the mobile node. In the downlink, the relay node inspects the signaling messages to the mobile node in order to determine whether they are messages for handling data bearer establishment and whether the network entity accepts or rejects the mobile node's request. For example the relay node determines whether the signaling message to the mobile node is a service accept or a service reject message.

By inspecting of received packets at the relay node it is further enabled to decide whether the relay node shall establish the data bearer(s) or shall transit again in idle state.

Preferably, when the received message is determined to be a signalling message for handling a data bearer establishment, a relay node control message is generated for initiating a data bearer establishment, the generated control message is transmitted to a mobility management entity serving the relay node in control plane in a container together with the encapsulated message for the mobility management entity serving the mobile node. In particular, the relay node control message is a message for initiating a data bearer establishment on the interface between the relay node and a base node serving the relay node. For instance the relay node may generate a service request message or a tracking area update message for requesting data bearer establishment on the interface between the relay node and a base node.

Preferably, the signaling message issued by the relay node is of a similar type as the message received from the mobile node. For instance, if the mobile node transmits to the relay node a service request message, the relay node will itself issue a service request message. If, on the other hand, the mobile node issues a tracking area update, the relay node will also issue a tracking area update message.

Transmitting the generated control message to a mobility management entity serving the relay node in control plane in a container together with the encapsulated message for the mobility management entity serving the mobile node provides an advantage of faster data bearer establishment and reduces the overall amount of signaling message exchanges. Especially, transmitting of the generated message enables faster starting of data bearer establishment on the interface between the relay node and the base node while the encapsulated message is further forwarded to the mobility management entity serving the relay node and later to the mobility management entity serving the mobile node.

The present invention is not limited by the above examples and in general, any other messages related to data bearer establishment may also be received, inspected and transmitted further in control plane. Messages such as detach request or acknowledgement as well as single data packets sent over control plane such as a Short Message Service (SMS) may also be inspected and forwarded by the relay node in control plane as well as any other signaling messages issued by the mobile node and destined to the mobility management entity serving the mobile node.

In accordance with an embodiment of the present invention, the relay node is capable of receiving a message for paging a mobile node from the network. The relay node inspects the received paging message for determining whether another paging message has already been transmitted by the relay node for the mobile node within a predetermined time period. When it is determined that no other paging message has been previously transmitted by the relay node for the mobile node within the predetermined time period, the relay node transmits the paging message. Otherwise, the relay node does not transmit the paging message. By not transmitting the duplicated paging messages, unnecessary signaling load is reduced.

In accordance with another aspect of the present invention, a method is provided for transmitting a message between a mobility management entity serving a mobile node and the mobile node, over a mobility management entity serving a relay node and over the relay node in a mobile communication system. The method comprises the following steps performed by the mobility management entity serving the relay node: receiving a message from the relay node, the relay node being possibly in idle state, the message from the relay node including a message from a mobile node encapsulated in a control plane protocol and destined for a mobility management entity serving the mobile node; and transmitting the encapsulated message to the mobility management entity serving the mobile node via a tunnel to a gateway serving the relay node.

In particular, the tunnel from the mobility management entity serving the relay node to the gateway serving the relay node may be implemented via a GTP-U protocol. The gateway serving the relay node may further maintain an IP address entry for routing the messages further to the mobility management entity serving the mobile node.

The mobility management entity serving the relay node preferably further receives an encapsulated message for the mobile node from the mobility management entity serving the mobile node and determines whether the message for the mobile node is a signalling message for handling a data bearer establishment. When it is determined that the message is a signalling message for triggering a data bearer establishment, the mobility management entity serving the relay node generates a signalling message for the relay node for triggering the data bearer establishment and transmits the generated message for the relay node in a container with the received encapsulated message for the mobile node.

Messages for data bearer handling, again, refer to message exchanged for triggering the data bearer establishment. In particular, messages related to requesting, granting, or positively/negatively acknowledging the data bearer establishment may be inspected. For instance, if the mobile node transmits a message for initiating the data bearer establishment such as a service request message to the mobility management entity serving the mobile node, the mobility management entity serving the mobile node may answer with a positive or with a negative response message. The positive response messages (e.g. service accept) as well as the negative response messages (e.g. service reject) are still messages for handling and/or triggering the data bearer establishment.

Preferably, when it is determined that the message triggers data bearer establishment, the tunnel between the gateway serving the relay node and the mobility management entity serving the mobile node is relocated to a tunnel between the gateway serving the relay node and a basis node. The relocating refers to establishing a new tunnel between the gateway serving the relay node and the basis node, while the tunnel between the gateway serving the relay node and the mobility management entity serving the mobile node is released. The tunnel relocation is accompanied by transition of the relay node from idle state to connected state, if the relay node has been in the idle state. In general, the tunnel relocation is triggered upon data bearer establishment for the relay node, i.e., data bearer establishment on the interface between the relay node and the base node and/or between the base node and the gateway serving the relay node. Such a data bearer establishment occurs, for instance, when the relay node issues a signaling message for triggering the data bearer establishment (e.g. service request message); or when the mobility management entity serving the mobile node wants to send packets to the eNB part of the relay node (i.e. S1-MME for the UE); or when the network (for instance, the gateway serving the relay node) receives data packets to be sent to the relay node.

In accordance with an embodiment of the present invention, the mobility management entity serving the relay node further receives over the tunnel from the gateway serving the relay node a paging message for paging a mobile node and transmits the paging message for paging the mobile node to at least one basis node at which the relay node is registered, which means, the basis node at which the relay node may presently camp.

According to still another aspect of the present invention, a relay node is provided for transmitting a message between a mobile node and a mobility management entity serving the mobile node over a relay node in a mobile communication system, the relay node comprising: a receiver for receiving a message from the mobile node while the relay node may be in the idle state; a message handler for encapsulating the received message into a relay node control plane protocol; and a transmitter for transmitting in control plane the encapsulated message for the mobility management entity serving the mobile node.

According to yet another aspect of the present invention, a mobility management entity serving a relay node is provided for transmitting a message between a mobility management entity serving a mobile node and the mobile node, over the mobility management entity serving the relay node and over the relay node in a mobile communication system, the mobility management entity serving the relay node comprising: a receiver for receiving a message from the relay node, the relay node being possibly in idle state, the message from the relay node including a message from a mobile node encapsulated in a control plane protocol for a mobility management entity serving the mobile node; a transmitter unit for transmitting the encapsulated message to the mobility management entity serving the mobile node via a tunnel to a gateway serving the relay node.

In accordance with still another aspect of the present invention, a computer readable medium storing instructions that, when executed by the processor, perform any of the above described methods. The processor may be either a processor in the terminal or a processor in the node of the access network of the communication system.

According to still another aspect of the present invention a communication system is provided comprising at least one relay node as described above and at least one mobility management entity serving the relay node as described above, a mobile node and a mobility management entity serving the mobile node.

The above aspects of the present invention and their various embodiments may be advantageously employed in a mobile communication system based on 3GPP LTE and, in particular, in its further versions and/or releases. When employed in such a system, the mobile node corresponds to the user equipment (UE), the base node corresponds to the donor eNB (DeNB), the gateway serving the relay node corresponds to S/PGW_RN, the mobility management entity serving the relay node corresponds to MMR_RN and the mobility management entity serving the mobile node corresponds to MME_UE. The message sent from the mobile node to the mobility management entity serving the mobile node may be a non-access stratum signalling message such as service request or tracking area update, the relay node may encapsulate the UE message into S1-AP protocol in order to transfer it over MME_RN to the MME_UE. However, the present invention is not limited to such a system. In general, it is applicable to any system with a similar architecture, meaning that there is a mobile node communicating with a network over a relay node and over a mobility management entity serving the mobile node, wherein the relay node may be in idle mode in which it does not have any data or signaling bearer set up to the network , or in connected mode in which the relay node has at least signaling bearer(s) and possibly also data bearers set up to another entity in the network.

Regarding the paging procedure, it is advantageous to keep the relay node in the idle state as long as possible and to avoid paging the same mobile terminal several times, however, it should be possible to page a mobile terminal in the relay node cell even if the relay node is in the idle mode. In order to reduce the number of paging messages sent to the mobile terminal, in accordance with the embodiments of the present invention, several improvements of the paging procedure are implemented. In particular, the relay node may receive and check mobile node paging messages and only page the mobile node once even if more paging messages arrived within a predefined time period as described above. This may be facilitated by a counter within the relay node for counting the time from the reception of a paging message for a particular mobile node. This reduces the signalling load on the interface between the relay node and the mobile node.

In addition, or alternatively, a base node may check whether, within a predetermined paging time, a paging message for the same mobile node is received in the base node and only page the mobile node once. Similarly to the relay node, the base node may also employ a timer (a counter) for determining whether any paging message has been received from the network for the same mobile node and only page the mobile node if there has not been such a message received from the network so far. In this way, the signalling load on the radio interface between the base node and the mobile node as well as on the interface between the base node and the relay node is reduced.

According to an alternative embodiment of the present invention, the mobility management entity serving the mobile node and the mobility management entity serving the relay node exchange information. In particular, the mobility management entity serving the mobile node maintains information about the base nodes covering tracking area(s) of a mobile node saved in a mobile node tracking area list, and communicates this information to the mobility management entity serving the relay node. The mobility management entity serving the relay node may based on this information determine whether the base node of the tracking area corresponding to a relay node overlaps with the tracking area(s) in the mobile node's list. The mobility management entity serving the relay node may than decide to forward the paging only to those base nodes the relay node tracking areas of which are not completely overlapping with the tracking area(s) covered by the base nodes in the mobile node list.

The above and other objects and features of the present invention will become more apparent from the following description and preferred embodiments given in conjunction with the accompanying drawings, in which:
- Figure 1 A: is a schematic drawing illustrating an exemplary architecture of a 3GPP LTE system,
- Figure 1 B: is a schematic drawing illustrating an exemplary overview of the overall EUTRAN architecture of a 3GPP LTE system,
- Figure 2: is a block diagram illustrating a functional structure of a relay network in accordance with architecture A of a 3GPP LTE system,
- Figure 3A: is a schematic drawing illustrating the protocol stack for the control plane of the RN architecture of Figure 2,
- Figure 3B: is a schematic drawing illustrating the protocol stack for the user plane of the RN architecture of Figure 2,
- Figure 4: is a signaling flow diagram illustrating an example of a signalling exchanged for transmission of an initial NAS message by a UE in accordance with the prior art,
- Figure 5: is a signaling flow diagram illustrating an example of a signalling exchanged for transmission of an initial NAS message by a UE in accordance with the present invention,
- Figure 6: is a schematic drawing illustrating an example of transporting UE NAS signaling to/from an MME_UE using tunneling between the MME_UE and the MME_RN,
- Figure 7: is a schematic drawing illustrating another example of transporting UE NAS signaling to/from an MME_UE using tunneling between the MME_UE and the MME_RN,
- Figure 8: is a signaling flow diagram illustrating an example of establishing the data bearers after receiving a NAS UE signaling message at the MME_UE,
- Figure 9: is a signaling flow diagram illustrating an example of establishing the data bearers after receiving a NAS UE signaling message at the MME_UE in accordance with the second of the present invention,
- Figure 10: is a schematic drawing illustrating a paging procedure according to still another embodiment of the present invention,
- Figure 11: is a schematic drawing illustrating the protocol stack for the paging,
- Figure 12: is a flow diagram illustrating the functionality of the relay node and the mobility management entity serving the mobile node in the uplink in accordance with an embodiment of the present invention, and
- Figure 13: is a flow diagram illustrating the functionality of the relay node and the mobility management entity serving the mobile node in the downlink in accordance with an embodiment of the present invention.

### DETAILED DESCRIPTION OF THE INVENTION

The following paragraphs will describe various embodiments of the invention. For exemplary purposes only, most of the embodiments are outlined in relation to 3GPP LTE Release 8 and LTE-A Release 10 mobile communication systems discussed above. Indeed, the present invention may be advantageously used for example in connection with a mobile communication system such as 3GPP LTE Release 8 and LTE-A Release 10 communication systems previously described. However, the present invention is not limited to its use in this particular exemplary communication network.

The explanations given above are intended to better understand the mostly 3GPP LTE Release 8 and LTE-A Release 10 specific exemplary embodiments described herein and should not be understood as limiting the invention to the described specific implementations of processes and functions in the mobile communication network. Nevertheless, the improvements to the Un signalling proposed herein may be readily applied in the architectures/systems described and may in some embodiments of the invention also make use of standard and improved procedures of theses architectures/systems.

The problem underlying the present invention is based on the observation that setting-up data bearers for transport of the UE NAS messages upon transition of the relay node connection management state from the idle state to the connected state causes a delay and results in a high amount of signaling messages to be exchanged especially on the interface between the relay node and the donor eNB, which reduces the efficiency of the entire system.

In order to improve the efficiency of the system, according to the present invention the RN does not need to establish data bearers for transmission/reception of a UE NAS message. The RN sets up the data bearers first when it is considered, based on the content of the UE NAS message, that a data bearer is necessary.

In particular, the present invention provides an improved transport of the signalling coming from a mobile terminal (UE) over a wireless relay node to the mobility management entity dealing with the location management of the mobile terminal. If the relay node is in the idle state, instead of establishing the data bearers and transporting the mobile terminal signalling over the established data bearers, the relay node uses its signalling bearers to its mobility management entity and/or back to carry the mobile terminal messages. Thus a NAS UE message is carried over the Un control plane (SRB) instead of the user plane (DRB + S1-U). If the relay node is in connected state and having data bearer(s) established, the mobile terminal signalling may be carried as usual over the user plane (DRB + S1-U).

### Transport of UE NAS signalling when no data bearer establishment is required

In the scenario assumed for the example of flow signalling in Figures 2 and 4, the UE 210 transmits a control signalling message such as an initial NAS message. In accordance with the present invention and differently from the example of Figures 2 and 4 (cf. for instance, "UE S1 path" in Figure 2 indicated by a thicker dashed line), this UE message is sent over the RN control bearer instead of the data bearer(s). In other words, the UE NAS signalling to the MME_UE 270 is sent over the RN NAS signalling, which means via the MME_RN 230. This may be performed in that the RN 220 decides depending on the RN connection management state (idle or connected) whether to carry the UE NAS messages over the RN NAS signalling. If the RN 220 is in the idle state, the UE NAS signalling is carried over RN control plane, which means over SRB and RN NAS signalling bearers. If, on the other hand, the RN 220 is in the connected state, and the RN 220 has already data bearers established, the UE NAS signaling is preferably carried as in the prior art, namely, over the RN user plane, which means over DRB and an S1-U tunnel. If the RN 220 is in the connected state but the RN 220 has no data bearer established, the UE NAS signaling may be carried over the RN control plane as in the case of RN 220 being in the idle mode. This may occur, for instance, if the RN does not have any data flow in user plane, but may receive or transmit, for instance, signaling data from or to another network entity such as the S/PGW_UE. Thus, according to whether the RN 220 has the data bearer established or not, the UE NAS signaling is transported over user plane or control plane, respectively.

In accordance with an embodiment of the present invention, while the RN 220 is in the idle state, in order to transport the UE NAS messages from the MME_RN 230 to the MME_UE 270, the RN S1-U tunnel between the S/PGW_RN 260 and the DeNB 240 is relocated from the DeNB 240 to the MME_RN 230. Preferably, the MME_RN 230 establishes the S1-U tunnel to the S/PGW_RN 260 when the DeNB 240 initiates the procedure for transition from the connected to the idle state. In order to facilitate this, the MME_RN 230 may implement a part of the eNB 220 functionality. When the MME_RN 230 detects that the RN data bearers must be established, the MME_RN 230 may trigger the S1-U relocation to DeNB 240.

In order to decide whether or not to carry the UE messages over signalling bearer, the RN 220 may inspect the NAS packets from a UE in order to distinguish initial access signalling, in particular initial NAS signalling. For instance, the following UE messages are considered as initial NAS signalling: "Attach Request", "TAU Request", "Service Request", "Detach Request" and single data packets sent over NAS_UE such as a Short Message Service (SMS) over SGs. If a UE NAS message is intended for setting-up a UE data bearer (for instance, if the UE NAS message is a TAU request with an Active Flag set, or a Service Request), the RN 220 triggers data bearer establishment during the transport of the UE NAS message. In order to achieve this, the RN 220 generates an own NAS message (Service Request) for activation of the RN data bearers. Both the UE NAS message and the RN NAS message (Service Request) are included in NAS container message and sent to the MME_RN 230. If the UE NAS signaling message to be transferred is not intended for setting-up a UE data bearer (TAU request with an Active Flack not set, or detach request), the RN 220 generates a corresponding own NAS message and transmits the UE NAS signaling message therein. More specifically, in the above explanation the RN NAS message is generated by the UE part 221 of the RN.

Thus, the RN 220 does not need to establish a data bearer to transport the UE NAS signalling. This further results in a faster message transport between the UE 210 and the MME_UE 270 as well as in a reduced amount of signalling over Un interface and in the entire EPC, since there is also no need to establish data bearers over the S1-U interface.

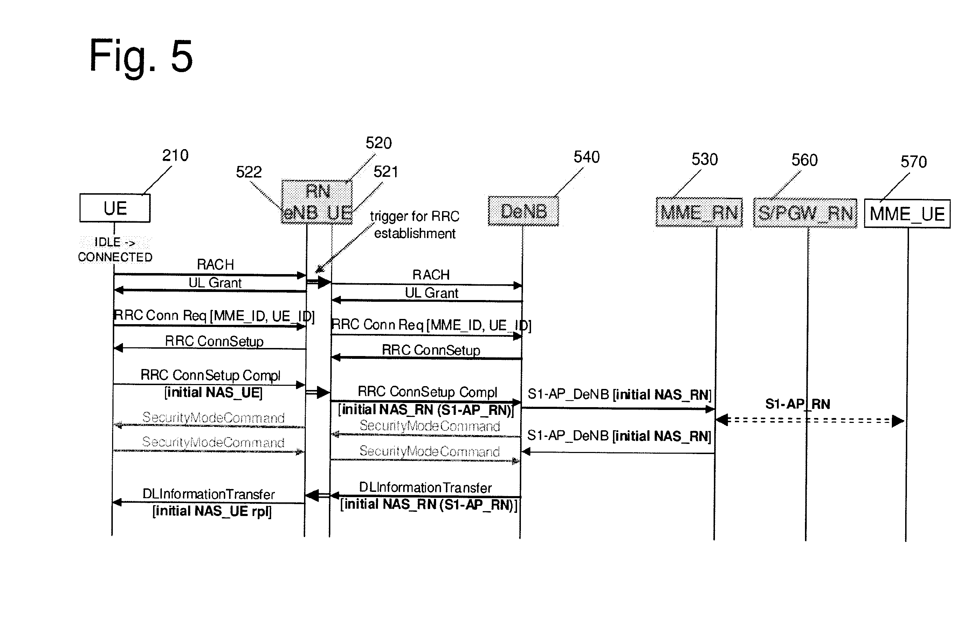

Figure 5 provides an example of the signalling flow for transporting UE NAS messages in accordance with the present invention. When a UE 210 initiates the establishment of the RRC connection with an eNB part 522 of a RN 520 (cf. RRC ConnReq [MME_ID, UE_ID]), the UE part 221 of the RN 520 also starts the establishment of the RRC connection with the DeNB 540. Both these RRC procedures (over the respective Uu and Un interface) may be executed at least partially in parallel. The procedure for RRC connection establishment and sending of the NAS messages is similar to the one described with reference to Figure 4. The essential difference to the signalling flow of Figure 4 is that after the RN 520 (in particular, the eNB part 522) receives the "initial NAS_UE" message from the UE 210 (cf. RRC ConnSetup Compl [initial NAS_UE]), the RN 520 (in particular, the UE part 521) generates an S1-AP message to be sent to the MME_UE 570. The generated S1-AP message is then included into the "initial NAS_RN (S1-AP_RN)" message, which is a NAS container message sent to the MME_RN 530. The initial NAS_RN (S1-AP_RN)" is then transmitted from the RN to the DeNB over Un interface as a control plane signalling (cf. RRC ConnSetup Compl[initial NAS_RN (S1-AP_RN)]). From the DeNB 540 (S1-AP_DeNB [initial NAS_RN]) the S1-AP message is forwarded to the MME_RN 530. The denotation "S1-AP_RN" means that this is an S1-AP message generated and sent from the RN 520. When this NAS container message arrives at the MME_RN 530, the MME_RN 530 extracts the "S1-AP_RN" message and forwards it further to the MME_UE 570.

In the downlink to the UE 210, the reply from the MME_UE 570 should also arrive at the MME_RN 530. When the MME_RN 530 obtains the corresponding "S1-AP_RN" message from the MME_UE 570, the MME_RN 530 generates a reply (rpl) to the "initial NAS_RN (S1-AP_RN)" message and sends the generated reply to the DeNB 540 (cf. S1-AP_DeNB [initial NAS_RN]), where it is extracted and sent forwarded to the RN 520 within a "DL Information Transfer" message (cf. DL Information Transfer [initial NAS_RN (S1-AP_RN)]). The RN 520 extracts the "initial NAS_UE rpl" message, which is the reply message, sent from the MME_UE 570, and forwards is to the UE encapsulated in the RRC message "DL Information Transfer" (cf. DL Information Transfer [initial NAS_UE rpl]).

The signalling flow as described above provides the benefit of transferring the initial UE NAS signalling in both uplink and downlink without having established data bearers. When compared with the signalling flow of Figure 4, the amount of signalling especially on the Un interface is essentially reduced.

The signalling flow described with reference to Figure 5 may be practically implemented within a communication system in various ways, depending on the functions and capabilities assigned to the network elements (e.g. RN 520, DeNB 540, MME_RN 530, S/PGW_RN 560, and/or MME_UE 570). In general, it is advantageous to maintain the functions of the existing network elements and to only introduce changes to as few of them as possible. In this respect, the signalling flow described above leads to several possible solutions for the transport of the UE NAS messages to and/or from the MME_UE. Since the RN 520 encapsulates the UE NAS message in the RN NAS message, the MME_RN 530 needs to process the RN NAS message accordingly, i.e., the MME_RN 530 needs to extract the UE NAS message from the RN NAS signalling message and forward it to the MME_UE 570.

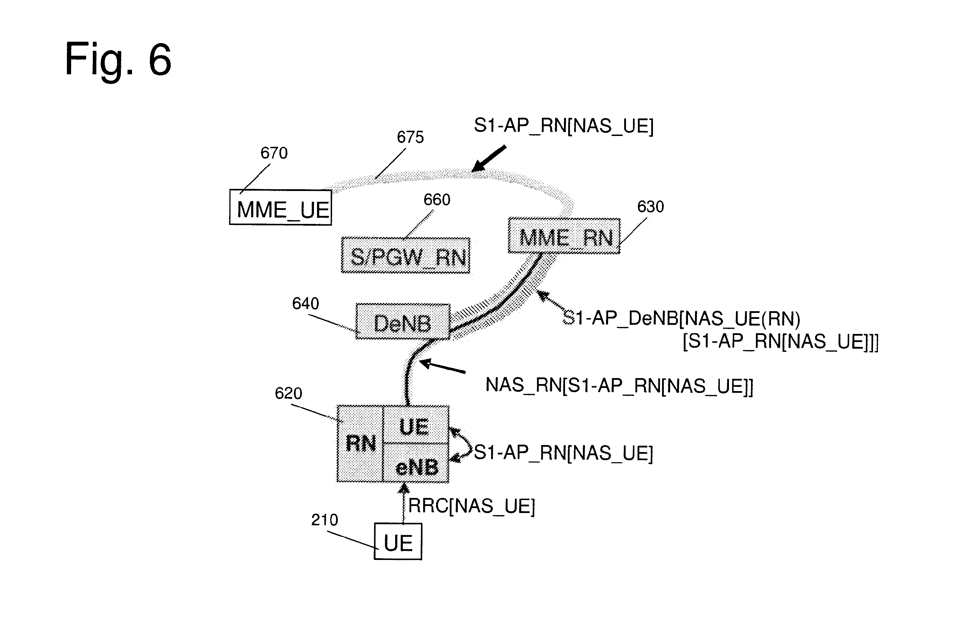

Figure 6 illustrates a first example of a corresponding transport of the UE NAS message to and/or from the MME_UE 670.

In the uplink direction to the MME_UE 670, the MME_RN 630 forwards the S1-AP message from the RN 620 in the same way as a usual RN control plane message, as a usual router, since the destination IP address of the RN S1-AP message is the MME_UE 670. Thus, the MME_RN 630 merely needs to route the message.

In the downlink, however, the typical procedure would be that the MME_UE 670 sends an S1-AP message to the RN 620 and the message thus arrives at S/PGW_RN 660. The S/PGW_RN 660 initiates data bearer establishment (S1-U bearer and DRB) since the S/PGW_RN 660 would treat this message as a usual data packet. Thus, even when the amount of signalling involved in transmitting the initial UE NAS signalling in the uplink direction to the MME_UE 670, the data bearers would still be established to carry, for instance, an initial UE NAS reply signalling.

In order to further improve the signalling procedure, in accordance with another embodiment of the present invention, the establishment of data bearers to the RN 620 is avoided for the downlink transport of the RN S1-AP message. This may be achieved in various ways. In the following a first example solution will be described.

According to this first example, the functionality of the MME_UE 670 is modified in such a way that in the uplink, the MME_RN 630 tunnels the UE NAS message (for instance, TAU request) to the MME_UE 670 over the S11 GTP-C based protocol. In the downlink, the UE NAS message (for instance, TAU response) encapsulated in an S1-AP message and addressed to the RN 620 is sent directly to the MME_RN 630 rather than to the S/PGW_RN 660, which is illustrated in Figure 6 as a tunnel 675 between the MME_UE 670 and MME_RN 630. This means that when the S/PGW_RN 660 receives an S1-AP message for the RN 620 and does not have an S1-U bearer, the S/PGW_RN 660 forwards the S1-AP message to the MME_RN 630 over the S11 (GTP-C). This tunneling is similar to the approach in the uplink, where the S1-AP messages are sent from the MME_RN 630 to the MME_UE 670. Also similarly to the uplink, this direct tunneling between the MME_UE 670 and MME_RN 630 should be applied when the RN 620 in the idle state and/or the data bearer are released. However, the MME_UE 670 usually does not have the information whether the RN 620 is in the idle or in the connected state. The MME_UE 670 only knows the state of the UE 210. In order to overcome this problem, a new functionality is added to the MME_UE 670. Accordingly, the MME_UE 670 is configured for detecting whether the uplink S1-AP message arrives directly from the MME_RN 630 or from the S/PGW_RN 660. After performing the detection, the MME_UE 670 sends the downlink S1-AP message over the same path either down to MME_RN 630 or to the S/PGW_RN 660, respectively.

Figure 6 also illustrates possible packet formats of the initial signalling message sent from the UE 210 along the path to the MME_UE 670 in accordance with this first example. In particular, the initial NAS message from the UE 210 is encapsulated over the Uu interface in an RRC message shown as RRC [NAS_UE]. In the eNB part of the RN 620, the NAS_UE message is encapsulated in an S1-AP message resulting in S1-AP_RN [NAS_UE]. The resulting message is then internally transferred from the eNB part of the RN 620 to the UE part of the RN 620, where it is again encapsulated into an RN NAS message NAS_RN [S1-AP_RN[NAS_UE]] and encapsulated for transmission to the DeNB 640 over the Un interface into an RRC message (not shown in Figure 6, cf. Figure 5). In the DeNB 640 the NAS_RN [S1-AP_RN[NAS_UE]] message is encapsulated into a S1-AP message to be sent to the MME_RN 630 as S1-AP_DeNB [NAS_RN [S1-AP_RN [NAS_UE]]]. This encapsulation is illustrated in Figure 6 as follows: the original UE NAS message is shown by a thin black curve, whereas the RN S1-AP message is shown by a thicker grey curve and the DeNB S1-AP message is shown by an even thicker hatched curve. In the MME_RN 630 the RN S1-AP message is extracted from the DeNB S1-AP message and it is forwarded to the MME_UE 670 (cf. grey tunnel 675). The MME_UE 670 evaluates whether the message came from the MME_RN 620 or from the S/PGW_RN 660. After having found out that the message came from MME_RN 620, a reply message in the downlink is routed directly to the MME_RN 630.

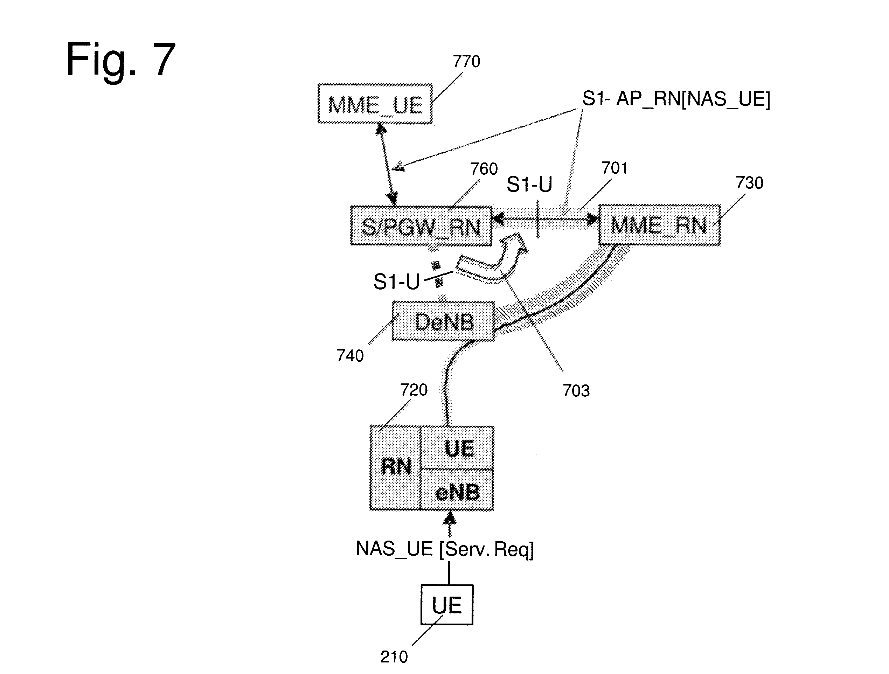

Figure 7 illustrates a second example of implementing the transfer of S1-AP messages carrying the US NAS signalling messages in uplink and/or downlink as generally described with reference to Figure 5. In accordance with this second example, the relay node mobility management entity emulates a data tunnel to the relay node packet data gateway, so that the mobile terminal signalling messages can be forwarded to the mobile terminal's mobility management entity possibly without modifying the functionality of other network entities. In particular, the MME_UE 670 does not have to be modified. In order to facilitate this, an S1-U tunnel 701 is established between the S/PGW_RN 760 and MME_RN 730 upon releasing the data bearer(s), which means, for instance, upon transition of the RN 720 in the idle mode. The MME_RN 730 preferably establishes the S1-U to S/PGW_RN when the DeNB initiates S1-AP "UE Context Release" procedure for transition of the RN 720 from the connected to the idle state. The MME_RN 730 shall implement some eNB functions. In other words, the MME_RN 730 emulates the eNB functionality to the S/PGW_RN 760. In particular, the MME_RN 730 pretends to the S/PGW_RN 760 that the RN 720 is in the connected mode. In this way, from the S/PGW_RN 760 perspective, the RN 720 is always reachable as it is attached to the MME_RN 730. When the MME_RN 730 detects that the data bearers have to be established (for instance, upon receiving a Service Request from the UE 210), the MME_RN 730 triggers the S1-U relocation (back) to the DeNB 740. Preferably, this is performed via a S1-AP "Handover Resource Allocation" procedure.

In the uplink direction, when the MME_RN 730 has an S1-AP message to be forwarded from the RN 720 to the MME_UE 770, the MME_RN 730 tunnels this message over the S1-U tunnel 701 to the S/PGW_RN 760. The S/PGW_RN 760 forwards the message to the MME_RN 730 as a usual data packet.

In the downlink when the S1-AP message arrives at the S/PGW_RN 760, the S/PGW_RN 760 observes this message as a usual data packet and since from the S/PGW_RN 760 perspective there is an active data bearer since the S1-U tunnel 701 is existing, the S/PGW_RN 760 forwards the S1-AP message to the MME_RN 730.

This second example can be seen as a relocation of the S1-U tunnel 701 from the DeNB 740 to the MME_RN 730. In Figure 7, this relocation is illustrated by an arrow 703. It is a similar situation as if the RN has performed a handover from the DeNB 740 to the MME_RN 730. The relocation 703 is advantageously performed upon each transition of the RN 720 from the connected mode to the idle mode.

In context of the 3GPP communication systems, the relocation may be performed, for instance as follows. When the DeNB 740 decides and/or detects that the RN 720 should transit to the idle state, the DeNB 740 initiates the S1-AP "UE Context Release" procedure as described in Section 8.3.2 of 3GPP, Technical Specification 36.413; "S1 Application Protocol (S1AP)"; v. 8.6.1, June 2009*.* Via the "UE Context Release" procedure, the DeNB 740 requests the MME_RN 730 to release the RN-associated logical S1-connection due to the transition of the RN 720 from the connected state to the idle state. In particular, the DeNB 740 sends an "RN Context Release Request" message to the MME_RN 730. Typically, after receiving such a message, the MME_RN 730 would trigger the S/PGW_RN 760 to release the S1-U resources. However, in order to implement the present invention in accordance with this second example, the MME_RN 730 triggers the S/PGW_RN 760 via the S-11 interface to establish (or switch) the S1-U tunnel 701 to a new DeNB, wherein the new DeNB is the MME_RN 230 itself. For this purpose the MME_RN 230 needs to implement at least the part of the eNB functionality that is used for establishing and maintaining the S1-U tunnel.

When the MME_RN 730 detects that RN data bearers must be established, for instance, due to the transition of the RN 720 back from the idle state to the connected state for instance upon establishing data bearers, the MME_RN 730 may trigger an S1-U relocation to the DeNB 740. Such an S1-U relocation may be necessary, for instance, when the RN 720 sends a "Service Request" message to the MME_RN 730. The message "Service Request" indicates that data bearer(s) for the RN 720 should be established and thus, a transition from the idle state to the connected state is necessary. The part of the S1-U relocation from the MME_RN 730 to the RN 720 may be performed in several ways. An advantageous way in 3GPP context is that the MME_RN 730 performs the S1-AP "Handover Resource Allocation" procedure as described Section 8.4.2 of 3GPP, Technical Specification 36.413; "S1 Application Protocol (S1AP)"; v. 8.6.1, Juni 2009*.* For the "Handover Resource Allocation" procedure, the MME_RN 730 sends a "Handover Request" message to the DeNB 740, the DeNB 740 verifies the resources that need to be reserved for the RN bearers, and the DeNB 740 sends a "Handover Request Acknowledge" message back to the MME_RN 730. This solution has an advantage of utilizing the already existing signaling related to the Handover Resource Allocation procedure. Another method to relocate the S1-U tunnel could be to establish a new S1-U tunnel between the DeNB 740 and the S/PGW_RN 760 and to tear-down the existing S1-I tunnel between MME_RN 730 and the S/PGW_RN 760. However, the present invention is not limited thereto and the relocation may be performed in any other way.

When comparing the first and the second example illustrated in Figure 6 and Figure 7, respectively, the second example may be preferable for an existing and/or at least partially standardized system, since the second example requires changes to less network elements. In contrast to the first example, the second example does not require any modifications to the MME_UE 770. It also does not require any changes to S/PGW_RN 760. However, new functionality is required in the RN 720 and in the MME_RN 730 for both example solutions.

In particular, in order to implement the second example described with reference to Figure 7, the MME_RN 730 should implement the following functions:
(i) emulate DeNB 740 for the RN 720, in particular, forward the UE NAS over S1-U tunnel to S/PGW_RN 760,
(ii) inspect/modify S1-AP packets coming from MME_UE 770 for the RN 720 in order to decide whether data bearer will be established, and
(iii) inspect/modify UE NAS messages coming from RN 720, encapsulate them and process according to the content.

Moreover, the RN 720 should implement the following functions:
(i) evaluate whether the UE NAS signaling message would result in an RN data bearer setup, and
(ii) if not, transmitting the UE NAS in RN NAS.

In accordance with the above described embodiment of the present invention, the UE NAS signaling message did not require an RN data bearer setup. Accordingly, the UE NAS signaling messages are encapsulated and the transported over the RN NAS signalling. In general, there are two reasons for the UE to initiate the NAS signalling: either the UE 210 may wish to establish data bearers for sending data packets or the UE 210 may perform another NAS procedure without wishing to establish data bearers, for instance, the UE may perform a TAU procedure.

### Transport of UE NAS signalling when data bearer establishment is required

According to another embodiment of the present invention, if the UE 210 requires establishing data bearers, the data radio bearers are established using a reduced amount of signalling. In a 3GPP based system, if UE 210 sends to the MME_UE 770, for instance, a TAU Request message with active Flag set (to one) or a Service Request message, an establishment of data bearers will be required since there will be also traffic other than the signalling of the TAU Request or the Service Request and a reply related thereto. In such a case, the RN needs to establish its own data bearers.

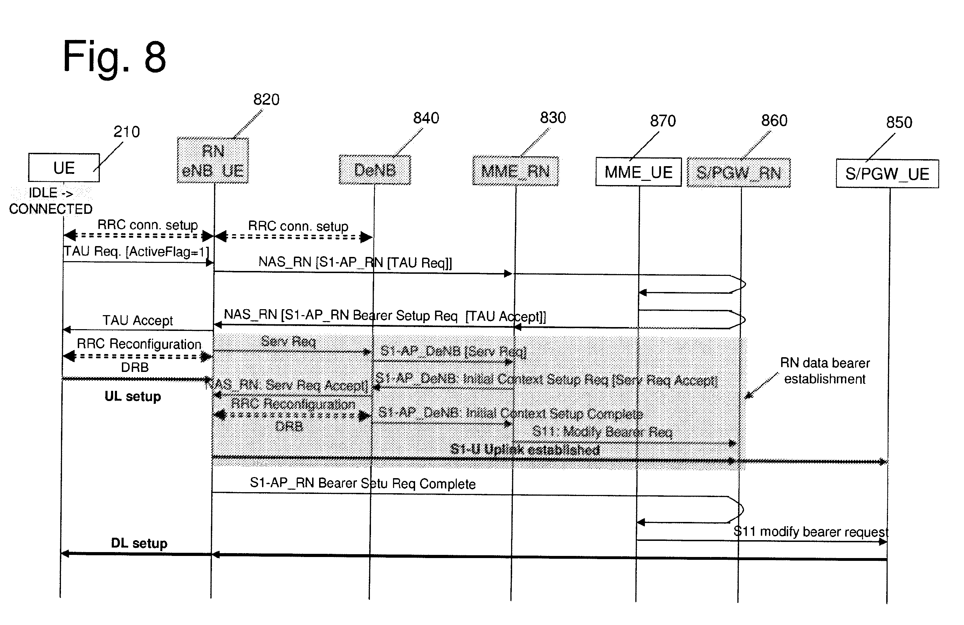

Figure 8 illustrates an example of establishing the data bearers triggered by the UE 210, in particular by the TAU Request message with the Active Flag set. Accordingly, after the UE NAS message exchange is completed (UE NAS message is transported over the RN NAS signalling as described above), the RN 820 receives in an S1-AP message from the MME_UE 870 a trigger to establish DRB over the Uu interface and S1-U bearer to the S/PGW_UE 850. In particular, the RN 820 starts the procedure for data bearer establishment, for instance, by sending a NAS Service Request message to the MME_RN 830 after having received the RRC DL InformationTransfer [initial NAS_RN(S1-AP_RN)] message from the DeNB 840 (cf. Figure 5). The S1-AP_RN message sent from the MME_UE 870 contains a trigger to the RN 820 to start the establishment of the UE's data bearers. Since the UE data bearers should be established, the RN 820 triggers the activation of its own data bearers, and also a transition from the idle to the connected state.

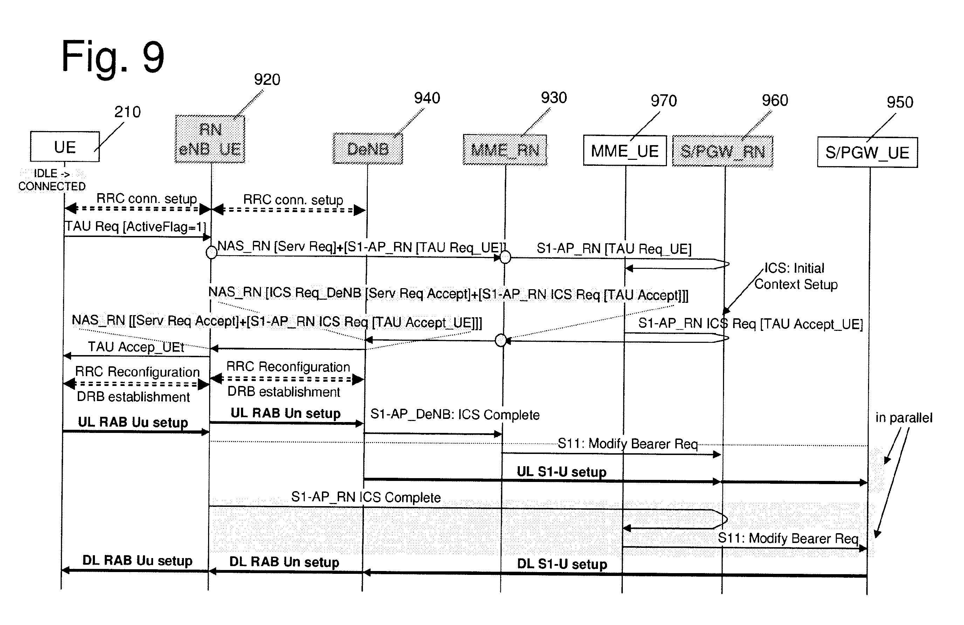

Figure 9 illustrates another example signalling flow for establishing data radio bearers in accordance with this embodiment of the present invention. If the RN data bearers are established after the initial UE NAS message exchange has been completed, as shown in the example described with reference to Figure 8, the delivery of the UE data packets would be delayed. In addition, the signalling amount over the Un interface is rather high. In this example improved establishment of the RN data bearers over the Un and S1-U interfaces is provided in order to reduce the number of signalling exchanges and the transmission delay of UE data packet. The improvement is based on the new functionality of the RN 920, which may be in the idle state, introduced above, namely that the RN 920 inspects the UE NAS messages in order to determine whether the UE 210 performs a TAU procedure in order to only update its location, or whether the UE 210 would like to establish data bearers. For instance, the RN 920 inspects whether the UE NAS messages are TAU Request with active Flag or Service Request. If this is the case, the RN 920 starts establishing its data bearers in parallel to transmitting the UE NAS message. The RN 920 can activate its data bearers by sending a Service Request (or TAU Request with active Flag). The Service Request message is an RN own NAS message NAS_RN [ServReq] which, according to this example, is sent to the MME_RN 930 in addition to the encapsulation of the UE NAS message in the S1-AP message S1-AP_RN [TAU Req_UE]. The RN's own NAS message and the RN's S1-AP message (for transporting the UE's NAS message) are sent together in a NAS container message. It should be noted that the RN 920 may look into the content of the UE NAS messages for inspection, for instance, in order to evaluate whether or not the UE 210 triggers the data bearer establishment (for example by sending Service Request or TAU Request with active Flag). The inspection is possible because the initial NAS message is always sent without ciphering.

In particular, after establishing the RRC connections over the Uu and Un interfaces ("RRC Conn. Setup"), the RN 920 receives the initial NAS message ("TAU Req [ActiveFlag=1") from the UE 210. The RN 920 inspects the message and if it is a Service Request or TAU Request with active Flag, the RN 920 generates a container NAS message including its own Service Request message for establishing of the RN data bearers and the S1-AP message to the MME_UE 970 including the UE TAU Request with the Active Flag set. This container message is shown in Figure 9 as NAS_RN [ServReq]+[S1-AP_RN [TAU Req_UE]]. The MME_RN 830 forwards the S1-AP message to the MME_UE 970. This S1-AP message is forwarded over the S/PGW_RN 960.

The MME_UE 970 replies with an S1-AP message including the Initial Context Setup (ICS) Request to the RN 920, in particular, to its eNB part, and further including the NAS TAU Accept message addressed to the UE 210. When this S1-AP message arrives at the MME_RN 930, the MME_RN 930 encapsulates it in an RN NAS message addressed to the RN 970, in particular to its UE part. Moreover, the MME_RN 930 adds a NAS Service Request Accept message addressed to the UE part of the RN 920. The message from the MME_RN 930 to the DeNB 940 is shown in Figure 9 as NAS_RN [ICS Req_DeNB [ServReqAccept] + [S1-AP_RN ICS Req [TAUAccept]]]. This message thus includes S1-AP ICS Request to the DeNB 940 together with the Service Request Accept message to the RN 920 as well as the S1-AP message to the RN 920. The whole NAS container message from MME_RN 930 to the UE part of the RN 920 is denoted as NAS_RN [[ServReqAccept]+[S1-AP_RN ICS Req [TAUAccept_UE]]].

When this NAS container message arrives at the RN 920, the UE part of the RN 920 parses the message to obtain the S1-AP message and forwards the S1-AP message to the eNB part of the RN 920. The RN 920 forwards the TAU accept message to the UE 210 over the Uu interface ("TAU Accep_UE"). Furthermore, the NAS Service Request message is parsed, and processed in the UE part of the RN 920. After this message is processed in the RN 920 and after the RRC re-configuration procedure for DRB establishment on the Uu and Un interfaces ("RRC Reconfiguration"), the uplink Radio Access Bearer on the Un interface ("UL RAB Un setup") is set-up. Afterwards the RRC re-configuration procedure for the UL RAB establishment over the Uu interface is performed ("UL RAB Uu setup").

The UL S1-U data bearer is established through exchanging of the S1-AP ICS Complete message ("S1-AP_DeNB: ICS Complete") between the DeNB 940 and MME_RN 930 and through the Modify Bearer Request message ("S11: Modify Bearer Req") over the S11 interface from the MME_RN 930 to the S/PGW_RN 960.

The downlink data bearers are established after the eNB part of RN 920 sends the S1-AP ICS Complete message (S1-AP_RN ICS Complete) to the MME_RN 930. The MME_UE 970 sends a Modify Bearer Request ("S11: Modify Bearer Req") message over the S11 interface to the S/PGW_UE 950.

The establishment of the uplink data bearer UL S1-U and the downlink data bearer DL S1-U data bearers, as described above, may be advantageously performed in parallel.

In order to implement such a signalling flow, new functionality has to be added to the RN 920 and to the MME_RN 930. In Figure 9, the time points of execution oh the new functions is shown by the grey dots on the RN 920 and MME_RN 930 vertical time lines. In particular, the RN 920 should
(i) inspect the UE NAS packets to identify whether data bearer will be necessary later or not,
(ii) based on the inspection decide whether the RN 920 should transit to the connected mode or not, and
(iii) if it is judged that the RN 920 should transit to the connected mode, an RN NAS is concatenated with the transport container for UE NAS signalling and transmitted to MME_RN 930.

The decision whether the RN 920 should transit to the connected mode or not is made according to the content of the UE NAS message. In particular, if the UE NAS message is a message that does not contain any request for establishing data bearers such as TAU request without Active Flag set (ActiveFlag = 0), the RN 920 remains without data bearers on the Un interface as described with reference to Figures 5 to 7. If indeed the UE NAS message is a message that includes a request for establishing data bearer such as TAU request with Active Flag set (ActiveFlag=1) or Service Request, the RN 920 shall transit to the connected mode.

The MME_RN 930 should further implement the following new functions:
(i) in the uplink, segment the concatenated RN NAS message and the transport container for the UE NAS message,
(ii) in the downlink, inspect the S1-AP packets coming from the MME_UE 970, and
(iii) decide whether an RN data bearer is needed or not.

The MME_RN 930 thus decides whether data bearers for the RN 920 shall be established or not. As shown in Figure 7, while the RN 920 is in the idle state, the RN S1-U tunnel is advantageously terminated at the MME_RN 930. When the MME_RN 930 detects that RN data bearers should be established (for instance upon receiving a Service Request message from the UE 210), the MME_RN 930 should trigger the S1-U reallocation to the DeNB 940. This S1-U reallocation procedure could be performed by the S1-AP "Handover Resource Allocation" procedure similarly as already described with reference to Figure 7 for the case of reallocation of the S1-U tunnel from DeNB 940 to the MME_RN 930 upon transition in the idle state.

By means of inspecting the NAS packets from the UE at the RN 920 and inspecting the S1-AP packets from MME_UE 970 at the MME_RN 930 the data bearer setup may be initiated with a reduced delay and with less signalling message exchanges in the network, especially on the Un interface.

### UE paging

If a UE 210 is in the idle state and data packets are to be delivered from the network to the UE 210, the network needs to first find out the exact UE location. This means that the eNB has to be identified in a cell of which the UE 210 is currently camping. The act of seeking the UE 210 is called paging.

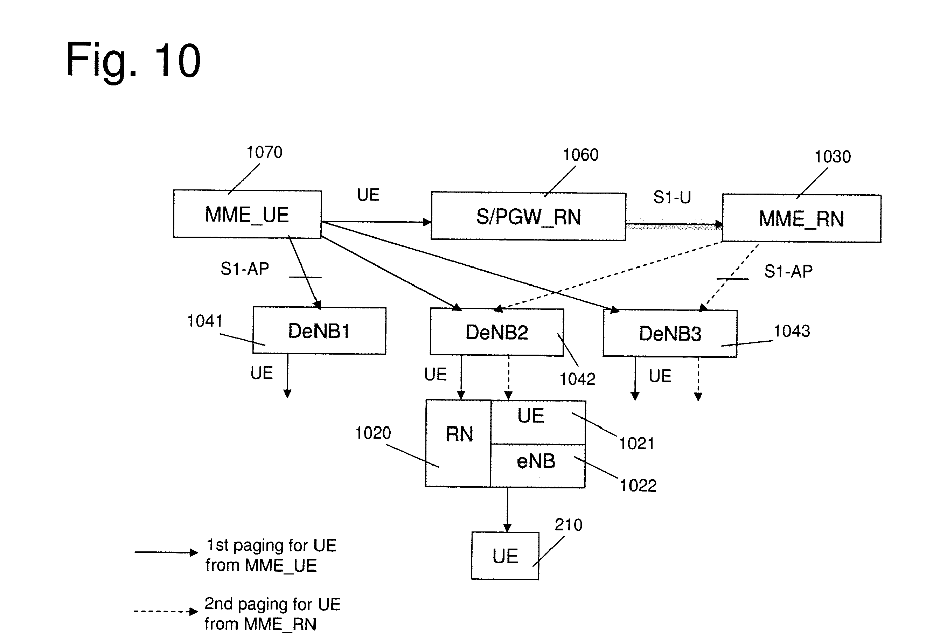

Figure 10 illustrates an example of paging. The MME_UE 1070 is informed by the P/SGW_UE 250 (not shown in Figure 10) that packets should be delivered. The MME_UE 1070 then sends a paging message to all eNBs being a part of the so called tracking area, in which the UE 210 can move without having to perform TAU procedure (except the periodic TAU procedure). This is shown in Figure 10 by means of solid line arrows (via S1-AP) from the MME_UE 1070 to DeNB1 1041, DeNB2 1042, and DeNB3 1043. It is assumed that the UE tracking area (TA) may include multiple eNBs and RNs. Therefore, the MME_UE 1070 sends the paging messages to all eNBs and RNs included in the UE TA. Since the RNs are served by the S/PGW_RN 1060, the paging message would also arrive at the S/PGW_RN 1060. If the RNs are in connected mode, then the S/PGW_RN 1060 forwards the paging message over the data bearers to the RNs (please note that this is not shown in Figure 10). Figure 10 shows a scenario according to the example described with reference to Figure 7, where the S/PGW_RN 1060 forwards the paging message to the MME_RN 1030, if the RN 1020 is in the idle state. The MME_RN 1030 also does not know its exact location, especially when the RN 1020 is mobile. Thus, the MME_RN 1030 has normally to first initiate a paging for the RN 1020 in order to establish a NAS connection to the RN 1020 (more precisely to the UE part 1021 of the RN 1020). After the RN 1020 transits to the connected state, the MME_RN 1030 can send the UE paging message to the RN 1020, so that the RN 1020 can page the UE 210 in the RN's own cell. However, since the UE 210 does not necessarily camp in the RN cell, establishing the NAS connection between the MME_RN 1030 and the RN 1020 as well as the corresponding transition of the RN 1020 from the idle state to the connected state may be unnecessary.

According to still another embodiment of the present invention, thus, the RN paging is avoided. This is achieved in that the MME_RN 1030 pages the UE 210 instead of paging the RN 1020 (more precisely to the UE part 1021 of the RN 1020). In particular, the MME_RN 1030 sends a paging message for the UE 210 to the DeNBs part of the RN's TA, where the RN 1020 is registered, for instance, to the DeNB2 1042 and DeNB3 1043 as shown in Figure 10 (shown by means of dashed line arrows).

In order to enable paging the UE 210, the MME_RN 1030 needs to have an association between the UE 210 and the corresponding RN 1020, which is included in the UE's TA eNB cell list. This association is available in the MME_UE 1070, but not in the MME_RN 1030. The MME_RN 1030 can, in one example, establish this association during a TAU procedure performed by the UE 210 over the RN 1020. In another example, the association between the UE 210 and the corresponding RN 1020 can be established during the process of including the RN Tracking Area Identifier (TAI) in the UE's TAI list (also known as the eNB cell ID list) when the MME_UE 1070 generates the TA for the UE 210. The MME_RN 1030 then forwards the UE paging message to those DeNBs included in the RN 1020 tracking area. In order to facilitate this, the MME_RN 1030 has to implement the following new functions: (i) paging the UE 210 although the UE 210 is not registered at the MME_RN instead of paging the RN 1020, (ii) determining the relation between the UE 210 and the RN 1020 based on the S1-U message that carries the UE paging.

However, as it can be seen from Figure 10 for DeNB2 1042 and DeNB3 1043, this may result in two paging messages arriving at some of the DeNBs (the first paging message from the MME_UE 1070 and the second paging message from the MME_RN 1030 illustrated with a solid and the dashed lines, respectively). Consequently, the UE 210 would be paged repeatedly in the same macro cell as illustrated by the solid and dashed line outgoing from the DeNB2 1042 and the DeNB3 1043. The expression "macro cell" here refers to a DeNB cell, wherein an RN cell can be denoted as "micro cell". Thus, the optimization of paging in which the MME_RN 1030 directly pages the UE 210 instead of paging the RN 1020 may result in an increased paging signaling in the macro cell. Moreover, the MME_RN 1030 directly forwards the UE paging message to all DeNBs 1042, 1043 that are part of the RN's tracking area where the RN 1020 is registered because the MME_RN 1030 does not know which DeNBs are overlapping with the UE tracking area(s). However, the macro cell and the RN (micro) cell are not necessarily completely overlapping. This is the case, for instance, when the RN 1020 is deployed to extend the coverage of the macro cell. In such a case, the RN 1020 should page the UE in its cell. However, the RN 1020 never pages the UE 210 according to the above signalling scheme.

In summary, when the NAS signaling connection to the RN 1020 is avoided as described above, the following problems may occur:
(i) double paging in the macro (DeNB) cell, and
(ii) the micro (RN) cell never being paged.

In order to overcome these problems in the present embodiment, the following example solutions may be adopted.

In accordance with a first example, no modifications are required to the DeNB 1042. The DeNB 1042 pages the UE 210 each time when a paging message is received. Thus, the UE 210 is paged twice in the macro cell, the problem (i) is not overcome. However, the RN 1020 is modified in order to facilitate paging within the micro cell (cf. problem (ii)). In particular, the UE part 1021 of the RN 1020 listens to the paging channels of the DeNB 1042. The RN 1020 further keeps a track of all UEs that have the RN's TAI in its TAI list. In other words, the RN 1020 maintains a list of all UE, for which the RN's TAI is included among their tracking areas. When a UE 210 from the maintained list is paged, the eNB part 1022 of the RN 1020 pages that UE 210 in the RN cell. Otherwise, the RN 1020 does not need to page the UE. In this way, the micro cells may be paged, and, on the other hand, a micro cell is only paged if the UE has it as its TA, which avoids unnecessary paging of other RN cells.

In addition, the RN 1020 may have a timer *Tpage.* If the UE 210 is paged twice in the macro cell during the *Tpage* time period, the RN 1020 does not need to page the UE 210 twice in the RN cell. This is shown in Figure 10: the RN 1020 sends to the UE 210 only a single paging message (indicated by an arrow with a solid line) in its cell. The second paging (the dashed line) is not sent in the RN cell. Accordingly, the micro cell (RN cell) is indeed paged, but only once. This reduces the amount of unnecessary paging messages. The RN 1020 may also determine whether the UE has started an RRC connection establishment after the first paging. If so, no repeated paging is necessary. Thus, the RN will not page such a UE.

Alternatively, the RN 1020 (the UE part 1021 of the RN 1020) has the new function of keeping a track of the paged UEs in the macro cell within a predefined short period of time and the RN 1020 may further monitor the paging channel even in the idle mode, so that it can keep a track of the paged UEs. If the RN 1020 determines that a given UE 210 is paged twice from the DeNB 1042 within the predefined short period, this is an indication to the RN 1020 that the UE 210 is not in the macro cell and could be in the coverage of the RN cell. Therefore the second UE paging in the macro cell triggers the RN 1020 to perform paging in its own cell. Thus, the eNB part 1022 of the RN 1020 initiates the UE paging in the RN cell. This means that the RN sends the paging message coming from the MME_RN over the broadcast channel of the Uu interface. If the UE 210 replies to the paging, the RN 1020 should initiate the transition from the idle to the connected state in order to serve the paged UE 210. In particular, if the UE is in the RN's cell and receives the paging message, the UE 210 initiates the Service Request procedure, which includes the sending of Service Request message to the MME_UE. When the RN that transmitted the paging message is in the idle state and this RN receives the Service Request message (being a response of the UE to the paging message) from the paged UE, the RN shall initiate the transition from the idle state to the connected state as described above. When the MME RN receives a container NAS message from the RN containing the UE's Service Request as response to the paging message and the RN's Service Request message, the MME_RN shall proceed further with the procedure of establishing the RN's data bearers (i.e. the RN's transition to the connected state) without waiting for the positive reply from the MME_UE to the UE's Service Request message.

In accordance with a second example, also the functions of DeNB 1042 are extended. In particular, the DeNB 1042 keeps a track of already paged UEs for a given period of time (for instance a predefined time period Ttwice_page). When the DeNB 1042 receives a second paging message for a given UE from the MME_RN 1030 within the Ttwice_page period, then the DeNB 1042 does not transmit the second paging message because the DeNB 1042 assumes that the second paging message was sent by the MME_RN 1030. The RN 1020 acts as in the first solution above, namely, it listens to the paging channel and forwards the paging to its cell, if the UE is in the RN's list of UEs. Having this function in the DeNB 1042, the UE 210 would be paged just once in the macro cell and in the micro (RN) cells. If the paged UE 210 is in the RN's cell and the RN 1020 is in the idle state, the RN shall transit to the connected state. This procedure and the corresponding handling of the RN 1020 and the MME_RN 1030 are similar to those described above for the first example.

In accordance with a third example, the MME_UE 1070 is aware that an RN TAI is included in the UE's TAI list. Then, the MME_UE 1070 informs the MME_RN 1030 about the tracking areas (TAIs or respectively the eNB ID) which are included in the UE's TAI list. When the MME_RN 1030 receives such information, the MME_RN 1030 can determine which eNBs of the UE's tracking areas are overlapping with the DeNBs included in the RN's tracking areas. If the MME_RN 1030 receives a paging message for the UE 210, the MME_RN 1030 can forward the paging message only to those DeNBs (from the RN's TAs) that are not included in the UE's TAs. The benefit of this third example solution is that the double paging in the macro cells and micro cells is avoided, and thus, the first and the second example solutions are not necessary. However, this advantage comes with the cost of permanent updating procedure between the MME_UE 1070 and MME_RN 1030 in order to keep the MME_RN 1030 up-to-date every time when a UE's TAs changes for UEs that might camp on an RN cell.

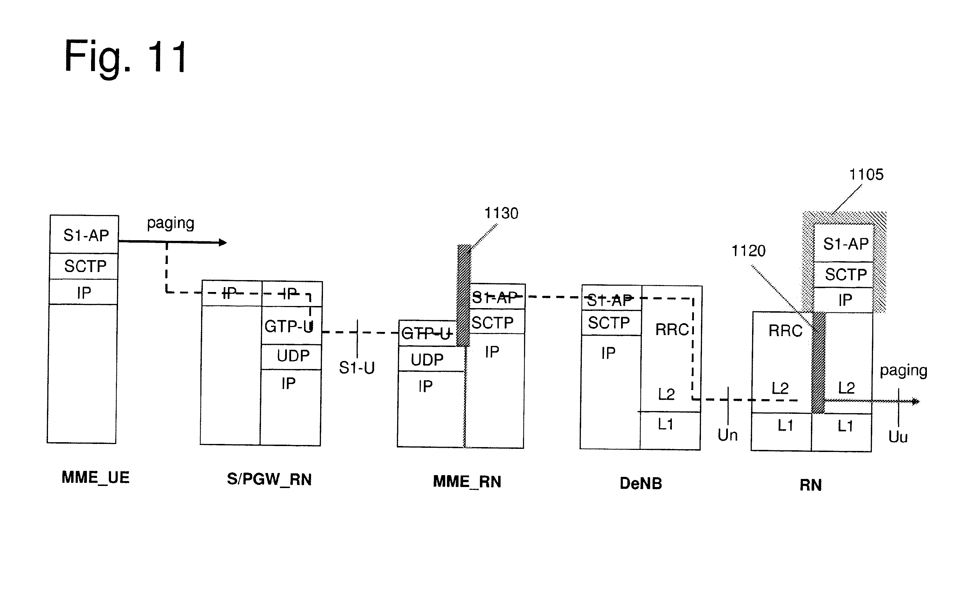

Figure 11 illustrates the UE paging procedure and an example of the related protocol stack for the first example solution described above. In particular, the MME_UE 1070 transmits the paging message to the UE 210. In a network with relay node(s), the paging message arrives at the S/PGW_RN 1060 as an IP packet. The S/PGW_RN 1060 tunnels the paging message to the MME_RN 1030 over the S1-U tunnel. The MME_RN 1030 implements a new functionality 1130 as described above and forwards the original S1-AP paging message from the MME_UE 1070 into another S1-AP paging message to the DeNBs 1042, 1043 to which the relay node in idle mode is registered. Each DeNB that has received the S1-AP paging message then transmits the paging over the radio channel using layer 2 signalling (RRC protocol). The RN 1020 (more specifically the UE part 1021 of the RN 1020) that has received the paging for the UE over the Un interface implements a special new function 1120 to relay the paging for the UE on the Uu interface. Depending on the implementation, if the eNB part 1022 of the RN 1020 needs to acknowledge the reception of the S1-AP message to the MME_UE 1070, then the UE part 1021 of the RN 1020 may need to implement a new feature to inform the S1-AP layer 1105 of the eNB part 1022 of the RN 1020 about the received paging for the UE over the Un interface, as this new feature can be observed as part of the function 1120. The RN 1020 may further check whether it has already sent a paging message for the same UE within a predefined time and only send the paging message to the UE over the Uu interface if it has not yet been sent as described above. During this procedure, there is no need to establish neither the signaling bearers nor the data bearers for the RN. With other words the UE's paging is carried to the RN in idle state without the need for the RN to transit to connected state. This is facilitated by the new functionality of the MME_RN to relay the UE's paging message and the RN's functionality to listen for UE's paging on the Un interface, and thus relaying the paging in the control plane as illustrated in Figure 11.

The above embodiments of the present invention have been described based on the architecture A of a network deploying relay node(s). The present invention is applicable to any of the alternatives of architecture A. Moreover, the present invention is not limited to a system based on the 3GPP LTE, the vocabulary of which has been employed in the above examples in order to explain the embodiments of the present invention.

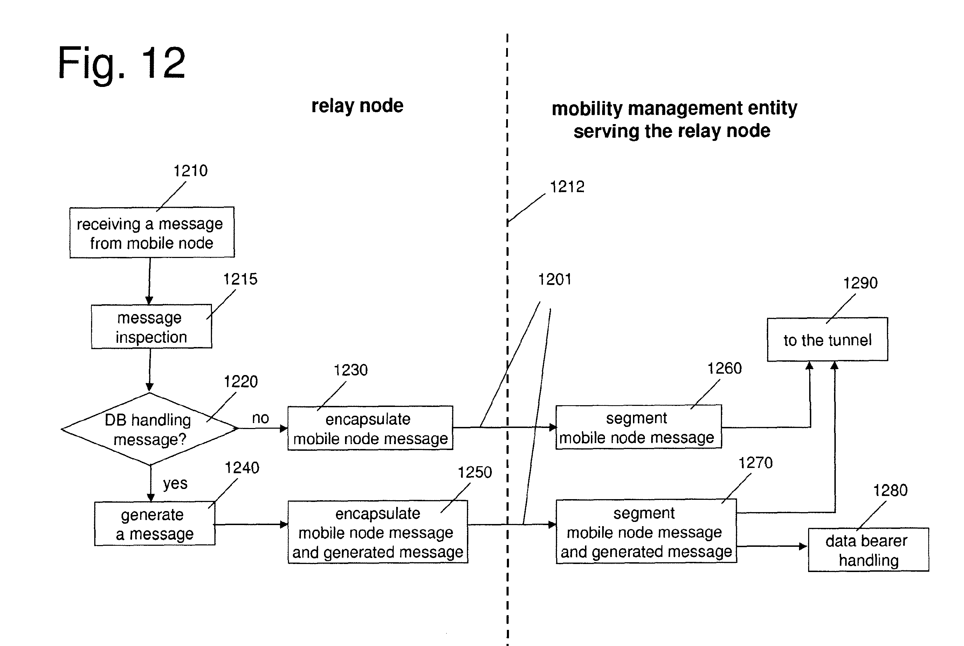

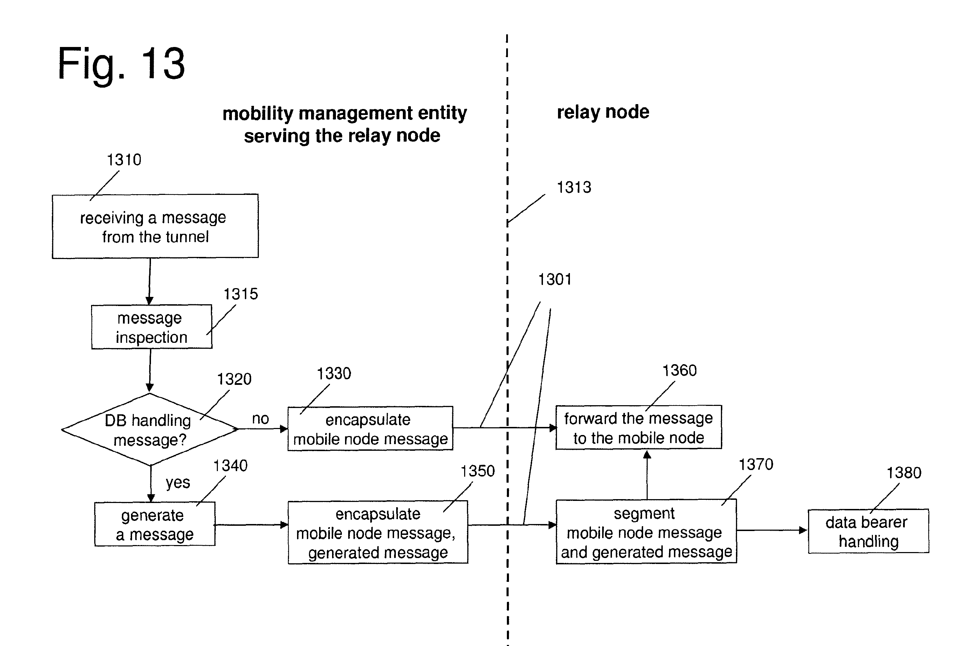

Figures 12 and 13 summarize the functions performed by a relay node and a mobility management entity serving the relay node in the uplink and downlink, respectively, according to the present invention and some of its embodiments. In general, the present invention is applicable to any wireless mobile communication network in which a mobile node communicates with the network over a relay node. It is further assumed that the mobile node communicates with a mobility management entity serving the mobile node, which, in general, is responsible for tracking and/or paging a mobile node especially in the idle state. A mobility management entity serving the relay node is responsible for tracking and/or paging the relay node especially in the idle state. A mobile node or a relay node is in idle state if it does not have any signaling or data bearer established to the network. A mobile node or a relay node is in connected state if it has a signaling or a data bearer established to the network. The relay node may be, in general, fixed or mobile. The present invention enables improving the efficiency of signalling between the mobile node and the mobility management entity serving the mobile node over a relay node in that the relay node can remain without establishing the data bearers during the exchange of signalling messages between the mobile node and the mobility management entity serving the mobile node. This is achieved by means of new capabilities of a relay node and a mobility management entity serving the relay node which enable transferring the mobile node's signalling message to the mobility management entity serving the mobile node in control plane.

In particular, Figure 12 illustrates the steps performed for the uplink transmission at the relay node (on the left side of the separation line 1212) and at the mobility management entity serving the relay node (on the right side of the separation line 1212). The uplink transmission is a transmission from a mobile node towards a network. The relay node in the idle state (or in a connected state without data bearers) receives 1210, using a receiving unit, a signalling message from a mobile node. According to the present invention and differently from the state of the art, the relay node does not establish any data bearer in order to forward the message to the network. Rather, preferably, the relay node, using a message inspecting unit, inspects 1215 the received message, and determines 1220 whether the received message is a message for initiating a data bearer establishment for the UE. If the received message is not a message for initiating a data bearer establishment, the relay node, using a packet handling unit, encapsulates 1230 the received message in a control plane protocol and transmits 1201, using a transmitting unit, the encapsulated message in control plane to the network, in particular to its mobility management entity. If the received message is a message for initiating a data bearer establishment, the relay node, using a message generated unit, generates 1240 a signalling message for initiating a data bearer establishment for the RN and encapsulates 1250, using the packet handling unit, the received mobile node message in a control plane protocol. The encapsulated message from the mobile node and the generated message are then transmitted 1201 together, using the transmission unit, to the network. During the above procedure, the relay node remains without establishing the data bearers, however it transits to the connected mode, as the RN establishes the signaling bearers for transmission of the messages to the mobility management entity serving the relay node.

The relay node can communicate with its mobility management entity in the control plane. The mobility management entity serving the relay node thus receives 1201, using a receiving unit, the messages received 1210 by the relay node from the mobile node and transmitted to the network. It segments 1260, 1270, using a packet handling unit, the message from the mobile node received and forwarded by the relay node and forwards 1290 the mobile node message to a tunnel established between itself and a gateway serving the relay node and over it to the mobility management entity serving the mobile node. The tunnel is preferably established upon releasing the relay node's signaling and data bearers and entering of the relay node in the idle state. Establishing of such a tunnel enables forwarding the messages from the mobility management entity serving the relay node to the mobility management entity serving the mobile node and back without establishing a user plane connection, i.e. data bearers for the relay node. In case where in addition to the mobile node message also the generated relay node message has been received 1201 by the mobility management entity serving the relay node, this message is processed 1280 and accordingly, a data bearer establishment may be further initiated (accepted) or rejected.

Figure 13 illustrates the steps performed for the downlink transmission at the relay node (on the right side of the separation line 1313) and at the mobility management entity serving the relay node (on the left side of the separation line 1313). The downlink transmission is a transmission from a network towards a mobile node. The mobility management entity serving the relay node receives 1310, using a receiving unit, a message from the mobility management entity serving the mobile node via a tunnel over a gateway serving the relay node. Using the inspection unit, the mobility management entity serving the relay node inspects 1315 the received message and determines whether the received message is a message for handling data bearer establishment. In addition, it may be determined whether the received message is a paging message for the UE. If the message is not a message for triggering data bearer establishment, it is encapsulated 1330, using a packet handling unit, in a control protocol and transmitted 1301 to the relay node. If, on the other hand, the inspected message is a message for triggering data bearer establishment, the mobility management entity serving the relay node, using a message generating unit, may generate 1340 a signalling message containing positive or negative reply to the relay node as a reply to previously received 1270 message from the relay node and transmit 1301, using the transmitting unit, it together 1350 with the inspected message received from the mobility management entity serving the mobile node. If it is determined that the inspected message is a message for paging the UE, the mobility management entity serving the relay node may generate a message according the process of 1130 from Figure 11 and send this message to the base stations that are part of the relay node's TA according to the procedure described above with reference to Figure 11. This handling upon determining that the inspected message is a paging message for paging the UE is not shown in Figure 13, however, may be also implemented in addition or alternatively to the features shown therein.

Correspondingly, the relay node receives the messages transmitted from the mobility management entity serving the relay node. The message from the mobility management entity serving the mobile node for the mobile node is segmented 1370, using the packet handling unit, and forwarded 1360 using a transmitting unit to the mobile node. If the mobility management entity serving the relay node also transmitted a message for the relay node for handling data bearer establishment, the relay node may handle 1380 the data bearer establishment accordingly, for instance, if the message was accepting the data bearer establishment, the relay node may initiate data bearer establishment on its interface towards the network.

It should be further noted that the individual features of the different embodiments of the invention may individually or in arbitrary combination be subject matter to another invention. For instance, a network may receive data for a particular mobile node which may be in idle mode and in coverage (tracking area) of a particular relay node. Upon receiving the data, the mobility management entity serving the mobile node initiates paging procedure as described above with reference to Figures 10 and 11. In accordance with an embodiment of the present invention, the paging is tunnelled from the mobility management entity serving the mobile node to the mobility management entity serving the relay node, assuming that the relay node is in idle mode, and from there to the base nodes at which the relay node is registered. The relay node listens to the mobile node paging from the base node(s) and transmits the received mobile node paging messages in its cell. As described above, in order to avoid double paging of the same mobile node, diverse mechanisms may be adopted at the mobility management entity serving the relay node, and/or at the basis node and/or at the relay node. In particular, if for the same mobile node a plurality of paging messages is received within a predefined time period, only one of them is transmitted further. The paging of the mobile node as described above may also be implemented independently and separately from the other embodiments of the present invention. However, the mobile node upon receiving the paging may decide to initiate establishing of data bearers in order to receive the data from the network. In order to perform this, it transmits a signalling message to the relay node. The relay node, in accordance with another embodiment of the present invention, inspects the message and determines that is indeed a message for handling data bearer establishment. Accordingly, it transmits a control message to the mobility management entity serving the relay node for initiating a data bearer establishment and forwards together with the generated message the message received from the mobile node to the mobility management entity serving the mobile node and the procedure continues as described above with reference to Figures 12 and 13 for the case in which data bearer establishment is to be performed.

However, the message received from the mobile node by the relay node is not necessarily a reply to a paging message. It may also be an update sent by the mobile node upon changing its location (tracking area). In such a case, no data bearer establishment may be necessary, since apart of this message and the related reply from the mobility management entity serving the mobile node sent in the downlink, no data exchange typically follows.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Summarizing, the present invention relates to transmission of signalling messages between a mobile node and a mobility management entity serving the mobile node over a relay node, without establishing relay node data bearer to the network. In particular, the relay node receives a signalling message from the mobile terminal and without transiting to the connected mode encapsulates the received message in a control plane protocol and transmits it in control plane over the mobility management entity serving the relay node to the mobility management entity serving the mobile node. Transmission between the mobility management entity serving the relay node and the mobility management entity serving the mobile node may be facilitated by means of a tunnel over a gateway serving the relay node.

## Claims

1. A method for transmitting a message between a mobile node (210) and a mobility management entity (270) serving the mobile node (210) over a relay node (220) in a mobile communication system (100), the method comprising following steps performed by the relay node (220):
receiving a message from the mobile node (210);
encapsulating the received message into a relay node control plane protocol; and
transmitting in control plane the encapsulated message for the mobility management entity (270) serving the mobile node (210).

2. The method according to claim 1, further comprising the steps of:
determining whether the message received from the mobile node (210) is a signalling message for handling a data bearer establishment or not; and
when the received message is determined to be a signalling message for handling a data bearer establishment, generating a relay node control message for handling a data bearer establishment, and
transmitting to a mobility management entity (230) serving the relay node (220) in control plane the generated relay node control message in a container with the encapsulated message for the mobility management entity (270) serving the mobile node (210).

3. The method according to any of claims 1 to 2 further comprising the steps of:
receiving a paging message for paging a mobile node;
determining whether another paging message has been transmitted by the relay node for the mobile node within a predetermined time period; and
transmitting the paging message only when it is determined that no other paging message has been transmitted by the relay node for the mobile node within the predetermined time period.

4. A method for transmitting a message between a mobility management entity (270) serving a mobile node (210) and the mobile node (210) over a mobility management entity (230) serving a relay node (220) and over the relay node (220) in a mobile communication system (100), the method comprising following steps performed by the mobility management entity (230) serving a relay node:
receiving a message from the relay node (220), the message from the relay node including a message from a mobile node encapsulated in a control plane protocol for a mobility management entity (270) serving the mobile node;
transmitting the encapsulated message to the mobility management entity (270) serving the mobile node via a tunnel over a gateway (260) serving the relay node (220).

5. The method according to claim 4, further comprising the steps of:
receiving in the mobility management entity (230) serving the relay node an encapsulated message for the mobile node (210) from the mobility management entity (270) serving the mobile node;
determining whether the message for the mobile node (210) is a signalling message for handling a data bearer establishment;
when it is determined that the message is a signalling message for handling a data bearer establishment, generating a signalling message for the relay node (220) for handling the data bearer establishment; and
transmitting the generated message for the relay node (220) in a container with the received encapsulated message for the mobile node.

6. The method according to claim 5, further comprising the steps of:
when it is determined that the message triggers data bearer establishment, relocating the tunnel between the gateway (260) serving the relay node (220) and the mobility management entity (230) serving the relay node (220) to a tunnel between the gateway (260) serving the relay node (220) and a basis node (240).

7. The method according to any of claims 4 to 6 further comprising the steps of:
receiving, in the mobility management entity (230) serving the relay node, over the tunnel a paging message for paging a mobile node (210);
transmitting the paging message for paging the mobile node to at least one basis node (240) at which the relay node (220) may camp.

8. A computer program product comprising a computer-readable medium having a computer-readable program code embodied thereon, the program code being adapted to carry out the method according to any of claims 1 to 7.

9. A relay node for transmitting a message between a mobile node (210) and a mobility management entity (270) serving the mobile node (210) over a relay node (220) in a mobile communication system (100), the relay node (220) comprising:
a receiving unit for receiving a message from the mobile node (210);
a message handling unit for encapsulating the received message into a relay node control plane protocol; and
a transmitting unit for transmitting in control plane the encapsulated message for the mobility management entity (270) serving the mobile node (210).

10. The relay node according to claim 9, further comprising:
an inspecting unit for determining whether the message received from the mobile node (210) is a signalling message for handling a data bearer establishment or not; and
a message generating unit for, when the received message is determined to be a signalling message for handling a data bearer establishment, generating a relay node control message for handling a data bearer establishment, wherein
the transmitting unit is configured to transmit to a mobility management entity (230) serving the relay node (220) in control plane the generated relay node control message in a container with the encapsulated message for the mobility management entity (270) serving the mobile node (210).

11. The relay node according to any of claims 9 to 10 further comprising:
a paging receiving unit for receiving a paging message for paging a mobile node;
a counter unit for determining whether another paging message has been transmitted by the relay node for the mobile node within a predetermined time period; and
a paging transmitting unit for transmitting the paging message only when it is determined that no other paging message has been transmitted by the relay node for the mobile node within the predetermined time period.

12. A mobility management entity serving a relay node for transmitting a message between a mobility management entity (270) serving a mobile node (210) and the mobile node (210), over a mobility management entity (230) serving a relay node (220) and over the relay node (220) in a mobile communication system (100), the mobility management entity serving a relay node comprising:
a receiving unit for receiving a message from the relay node (220), the message from the relay node including a message from a mobile node encapsulated in a control plane protocol for a mobility management entity (270) serving the mobile node;
a transmitting unit for transmitting the encapsulated message to the mobility management entity (270) serving the mobile node via a tunnel over a gateway (260) serving the relay node (220).

13. The mobility management entity serving a relay node according to claim 12, wherein the receiving unit is configured to receive an encapsulated message for the mobile node (210) from the mobility management entity serving the mobile node, and the management entity (230) serving a relay node further comprises:
a packet handling unit for determining whether the message for the mobile node (210) is a signalling message for handling a data bearer establishment;
a message generating unit for generating a signalling message for the relay node for handling the data bearer establishment when it is determined that the message is a signalling message for handling a data bearer establishment;
wherein
the transmitting unit is further configured to transmit the generated message for the relay node (220) in a container with the received encapsulated message for the mobile node.

14. The mobility management entity serving a relay node according to claim 13, further comprising the steps of:
a relocation unit for relocating the tunnel between the gateway (260) serving the relay node (220) and the mobility management entity (230) serving the relay node (220) to a tunnel between the gateway (260) serving the relay node (220) and a basis node (240) when it is determined that the message triggers data bearer establishment.

15. The mobility management entity serving a relay node according to any of claims 12 to 14 further comprising:
a paging receiving unit for receiving, in the mobility management entity (230) serving the relay node, over the tunnel a paging message for paging a mobile node (210);
a paging transmitting unit for transmitting the paging message for paging the mobile node to at least one basis node (240) at which the relay node (220) may camp.
